(19) Europäisches Patentamt
European Patent Office
Office européen des brevets

(11) **EP 3 502 659 B1**

(12) **FASCICULE DE BREVET EUROPEEN**

(45) Date de publication et mention de la délivrance du brevet:
**22.04.2020 Bulletin 2020/17**

(21) Numéro de dépôt: **17306898.2**

(22) Date de dépôt: **22.12.2017**

(51) Int Cl.:
***G01N 15/08*** *(2006.01)*

(54) **PERMEAMETRIE EN MILIEU GAZEUX RAREFIE POUR CARACTERISER UNE STRUCTURE POREUSE MULTICOUCHE**

PERMEAMETRIE IN EINER VERDÜNNTEN GASFÖRMIGEN UMGEBUNG ZUR CHARAKTERISIERUNG EINER PORÖSEN MEHRSCHICHTIGEN STRUKTUR

PERMEAMETRY IN RAREFIED GAS ENVIRONMENT FOR CHARACTERISING A MULTILAYER POROUS STRUCTURE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**26.06.2019 Bulletin 2019/26**

(73) Titulaires:
 • **Université d'Aix Marseille**
   **13007 Marseille (FR)**
 • **CENTRE NATIONAL DE LA RECHERCHE SCIENTIFIQUE**
   **75016 Paris (FR)**
 • **Ecole Centrale de Marseille**
   **13013 Marseille (FR)**

(72) Inventeurs:
 • **MOULIN, Philippe, Guy**
   **13013 MARSEILLE (FR)**
 • **SAVARO, Clément**
   **13097 AIX EN PROVENCE (FR)**
 • **BONNET, Jean-Philippe**
   **83740 LA CADIERE D'AZUR (FR)**

(74) Mandataire: **Osha Liang**
   **2, rue de la Paix**
   **75002 Paris (FR)**

(56) Documents cités:
   **US-B2- 6 766 257     US-B2- 7 131 317**

 • **WEN-MING ZHANG ET AL: "A review on slip models for gas microflows", MICROFLUIDICS AND NANOFLUIDICS, SPRINGER, BERLIN, DE, vol. 13, no. 6, 28 juin 2012 (2012-06-28), pages 845-882, XP035144030, ISSN: 1613-4990, DOI: 10.1007/S10404-012-1012-9**

EP 3 502 659 B1

**Description**

**DOMAINE TECHNIQUE**

La présente description concerne un procédé de caractérisation en milieu gazeux raréfié de couches d'une structure poreuse multicouche ainsi qu'un système de caractérisation en milieu gazeux raréfié de couches d'une telle structure.

**ETAT DE L'ART**

L'écoulement de gaz dans des structures poreuses comprenant des pores de diamètre hydraulique de l'ordre de quelques microns est étudié depuis de nombreuses années au fin de la caractérisation des pores de ces structures. La caractérisation des pores peut être intéressante par exemple pour la fabrication de membranes, de filtres en tous genres ou encore de supports de catalyseur.

L'écoulement de gaz dans un canal de cette taille peut être décrit au moyen de modèles dépendant des régimes d'écoulement. Le régime d'écoulement est généralement déterminé par le nombre de Knudsen, qui est un nombre adimensionnel défini par le rapport entre le libre parcours moyen des molécules constituant le gaz et une dimension caractéristique de l'écoulement du gaz dans la structure. Quand le nombre de Knudsen est compris entre $10^{-3}$ et 0.1, le régime d'écoulement est en milieu raréfié. En milieu raréfié, un phénomène bien connu de raréfaction est observé qui est généralement assimilé à du glissement à l'échelle du milieu continu car il en résulte un saut de vitesse (glissement dynamique) à l'interface gaz/paroi du canal. En conséquence, un modèle particulièrement utilisé est le modèle d'écoulement avec glissement qui tient compte d'une vitesse de glissement à l'interface gaz/paroi du canal.

A partir de l'écoulement dans un seul canal, le modèle d'écoulement avec glissement a été extrapolé pour l'écoulement de gaz dans une structure poreuse homogène en termes de taille de pores, en considérant la structure poreuse comme une structure constituée d'une pluralité de canaux.

Dans le cas d'une structure poreuse homogène, le modèle d'écoulement avec glissement permet d'obtenir des propriétés de la structure telle que le rayon des pores. Néanmoins, dans le cas d'une structure poreuse hétérogène constituée d'un empilement de plusieurs couches homogène chacune comprenant un ensemble de pores ayant un rayon différent des rayons des ensembles de pores des autres couches, le rayon obtenu est représentatif du milieu poreux dans sa globalité et ne caractérise pas chacune des couches.

La caractérisation de chaque couche d'une structure poreuse multicouche hétérogène de ce type est possible par des techniques telles que la tomographie ou d'autres techniques d'observations comme la microscopie électronique à balayage ou la porométrie mercure. Cependant, ces techniques présentent l'inconvénient de détruire la structure à caractériser et de permettre l'analyse d'un très faible volume de la structure.

Il apparait ainsi un besoin de disposer d'une technique de caractérisation non destructive de structures poreuses multicouche, notamment, mais non exclusivement, hétérogènes, permettant la caractérisation de chaque couche d'une structure entière.

US-B2-6 766 257 décrit un procédé qui serait approprié pour caractériser en milieu gazeux des couches d'une structure poreuse multicouche permettant une communication fluidique entre les couches et dans laquelle chaque couche comprend un ensemble de pores, le procédé comprenant les étapes suivantes: (i) écouler un gaz à travers les pores de la structure poreuse; (ii) mesurer l'évolution temporelle de la pression du gaz en amont de la structure poreuse et l'évolution temporelle de la pression du gaz en aval de la structure poreuse et utiliser des modèles appropriés pour calculer les structures des pores.

**RESUME**

La présente description a pour objet de fournir un procédé et un système de caractérisation en milieu gazeux raréfié de couches d'une structure poreuse multicouche permettant une communication fluidique entre les couches et dans laquelle chaque couche comprend un ensemble de pores.

Par « structure poreuse multicouche », on entend une structure poreuse comprenant au moins deux couches.

Dans une forme de réalisation, chaque couche peut comprendre un ensemble de pores en forme de canaux. Par exemple, les canaux peuvent avoir des diamètres de l'ordre du nanomètre voir du micromètre, par exemple compris entre 100nm et 30$\mu$m. Dans ce qui suit, sauf indication contraire, par « diamètre » on entend « diamètre hydraulique », c'est-à-dire 4A/P, A étant l'aire de la section de passage du canal et P étant le périmètre mouillé de cette section.

Les canaux peuvent par exemple être linéaires ou tortueux. La tortuosité peut être définie par un paramètre $\tau$. Quand les canaux sont linéaires et perpendiculaires à la surface de la structure, $\tau = 1$, tandis que quand les canaux sont tortueux, $\tau > 1$.

Par « milieu gazeux raréfié », on entend un milieu gazeux dans lequel le nombre de Knudsen est compris entre

$10^{-3}$ et 0.1. Pour rappel, le nombre de Knudsen est le rapport entre le libre parcours moyen des molécules du gaz et une dimension caractéristique de la géométrie de la structure dans laquelle l'écoulement du gaz s'effectue. Dans le cas d'un gaz qui s'écoule dans un canal cylindrique, la dimension caractéristique de l'écoulement du gaz peut être par exemple le diamètre du canal.

Dans ce qui suit, on entend par « libre parcours moyen ($\lambda$) des molécules de gaz à travers les pores », la distance moyenne parcourue par une molécule de gaz se déplaçant entre deux impacts successifs avec d'autres molécules de fluide.

Par « communication fluidique entre les couches », on entend qu'il est possible, par exemple pour un gaz, de traverser la structure poreuse multicouches en passant d'une couche à l'autre par les pores de chaque couche. Pour permettre une communication fluidique, les couches sont espacées par un espacement $\delta$. Par la suite, on considère que l'espacement $\delta$ tend vers 0 et qu'il n'intervient pas dans les pertes de charge du gaz dans la structure poreuse.

L'ensemble de pores de chaque couche a des propriétés. A titre illustratif, les propriétés peuvent comprendre le rayon de l'ensemble des pores d'une couche, la tortuosité de l'ensemble des pores d'une couche, la porosité d'une couche, la résistivité hydraulique d'une couche et/ou toutes combinaisons des propriétés précitées.

Chaque couche de la structure poreuse multicouche peut être homogène, c'est-à-dire que l'ensemble des pores de chaque couche peut avoir les mêmes propriétés.

Chaque couche de la structure poreuse multicouche peut être hétérogène, c'est-à-dire que l'ensemble des pores de chaque couche a des propriétés différentes. Dans ce cas, par « propriété » on entend une moyenne de la propriété sur l'ensemble des pores d'une couche.

Le procédé et le système selon la présente description reposent sur un modèle d'écoulement avec glissement qui tient compte d'une vitesse de glissement du gaz à l'interface gaz /parois des pores et sur l'assomption que la perte de charge du gaz à travers la structure poreuse soit égale à la somme des pertes de charge du gaz à travers chaque couche de la structure poreuse. En utilisant ce modèle, le procédé permet de caractériser des couches d'une structure poreuse multicouche de manière non destructive et précise.

Dans ce qui suit, par « perte de charge » d'un gaz à travers une structure poreuse, on entend la dissipation, par frottements, de l'énergie mécanique du gaz en mouvement à travers les pores de la structure. Cette dissipation peut s'exprimer par une variation de pression en amont et en aval de la structure poreuse à caractériser.

Selon un premier aspect, la présente description met à disposition un procédé de caractérisation en milieu gazeux raréfié de couches d'une structure poreuse multicouche permettant une communication fluidique entre les couches et dans laquelle chaque couche comprend un ensemble de pores. Le procédé comprend les étapes suivantes :

- écouler un gaz à travers les pores de la structure poreuse ;
- mesurer l'évolution temporelle de la pression du gaz en amont de la structure poreuse et l'évolution temporelle de la pression du gaz en aval de la structure poreuse ;
- établir un modèle d'écoulement du gaz dans la structure poreuse prenant en compte la vitesse de glissement du gaz à l'interface gaz /parois des pores et assumant que la perte de charge du gaz à travers la structure poreuse soit égale à la somme des pertes de charge du gaz à travers chaque couche de la structure poreuse ;
- ajuster le modèle d'écoulement du gaz dans la structure poreuse sur la base d'une courbe expérimentale d'un paramètre expérimental d'écoulement du gaz dans la structure poreuse tracée à partir des mesures de l'évolution des dites pressions du gaz en amont et en aval de la structure poreuse ; et
- déterminer au moins une propriété de l'ensemble des pores de chaque couche à partir du modèle d'écoulement du gaz ainsi ajusté.

D'une part, le procédé de la présente description permet d'obtenir les propriétés de l'ensemble de pores de chaque couche de la structure entière de façon non destructive ; il en résulte la possibilité d'utiliser la structure poreuse multicouche après caractérisation, par exemple de l'utiliser en filtration ou encore en échangeur liquide-liquide. D'autre part, le procédé de la présente description permet une caractérisation fine et rapide (par exemple <1 heures) de la structure poreuse multicouche, indépendamment de la nature du gaz utilisé. En outre, la consommation de gaz nécessaire à la caractérisation est faible.

Le procédé de la présente description peut également mettre en évidence des défauts aléatoires dans la structure en mesurant des propriétés éloignées de celles attendues ou estimées.

Selon un ou plusieurs modes de réalisation, le procédé de caractérisation comprend les étapes suivantes :

- écouler un gaz, à travers les pores de la structure poreuse;
- mesurer l'évolution temporelle de la pression du gaz en amont de la structure poreuse et l'évolution temporelle de la pression du gaz en aval de la structure poreuse;
- déterminer un paramètre expérimental d'écoulement du gaz dans la structure poreuse en fonction du libre parcours moyen ($\lambda$) des molécules du gaz à travers les pores de la structure poreuse à partir des mesures de l'évolution temporelle des dites pressions du gaz en amont et en aval de la structure poreuse ;

- établir un modèle d'écoulement du gaz dans la structure poreuse, le modèle prenant en compte la vitesse de glissement du gaz à l'interface gaz /parois des pores de chaque couche de la structure poreuse et assumant que la perte de charge du gaz à travers la structure poreuse soit égale à la somme des pertes de charge du gaz à travers chaque couche de la structure poreuse;
- établir, à partir du modèle d'écoulement du gaz dans la structure poreuse, un paramètre théorique d'écoulement du gaz dans la structure dépendant du libre parcours moyen ($\lambda$) des molécules du gaz à travers les pores de la structure poreuse;
- ajuster le modèle d'écoulement du gaz dans la structure poreuse de sorte que le paramètre expérimental soit égal au paramètre théorique ; et
- déterminer au moins une propriété de l'ensemble des pores de chaque couche à partir du modèle d'écoulement du gaz ajusté.

Selon un ou plusieurs modes de réalisations, le gaz s'écoule à travers les pores de la structure poreuse à une température constante et à un débit constant. Ce mode de réalisation permet de caractériser la structure poreuse de manière encore plus précise en diminuant le nombre de facteurs non contrôlés dans le procédé.

Selon un ou plusieurs modes de réalisations, la pression du gaz en contact avec la surface amont de la structure poreuse est homogène sur toute la surface.

Selon un ou plusieurs modes de réalisation, le gaz peut être par exemple un gaz d'argon, d'azote ou encore de l'air. Le gaz est de préférence un gaz pur, par exemple ayant une pureté égale ou supérieure à 99.0% en poids, par exemple supérieure à 99.0% en poids. Pour un gaz ayant une telle pureté, les propriétés thermodynamiques sont bien connues, en particulier l'évolution de la viscosité en fonction de la température. Ceci permet de caractériser la structure poreuse de manière plus précise en diminuant le nombre de facteurs inconnus dans le procédé.

Selon un ou plusieurs modes de réalisation, le paramètre expérimental d'écoulement du gaz dans la structure poreuse peut être un paramètre expérimental d/1-d déterminé par exemple sur la base de la formule (I) :

$$\frac{\Delta P|_{P=P_{ref}}}{\Delta P} = \left(\frac{P}{P_{ref}}\right)^{d} \ \text{(I)}$$

dans laquelle Pref est une pression de référence, P est la pression du gaz en aval de la structure poreuse et $\Delta P$ est la perte de charge du gaz à travers les couches à caractériser de la structure poreuse.

Par « pression de référence », on entend une pression autour de laquelle les pressions P du gaz en aval de la structure poreuse sont mesurées. En fonction des tailles de pores étudiées, la pression de référence est une pression quelconque dans une gamme telle qu'elle est ajustée pour rester dans les conditions d'un milieu gazeux raréfié, c'est-à-dire un nombre de Knudsen compris entre $10^{-3}$ et 0.1.

Selon un ou plusieurs modes de réalisation, le paramètre expérimental d'écoulement du gaz dans la structure poreuse peut être un paramètre expérimental d/1-d déterminé sur la base de la formule (I')

$$\frac{\Delta P|_{P=P_{ref}}}{\Delta P} = d\frac{P}{P_{ref}} + 1 - d \ \text{(I')}$$

Indépendamment de la façon dont on détermine le paramètre expérimental d/1-d, selon un ou plusieurs modes de réalisation, le libre parcours moyen ($\lambda$) des molécules du gaz à travers les pores de la structure poreuse est déterminé sur la base de la formule (II):

$$\lambda = \frac{\eta}{P_{ref}} U_{P} \ \text{(II)}$$

dans laquelle $\eta$ est la viscosité dynamique du gaz et Up est la vitesse la plus probable des molécules du gaz.

Selon un ou plusieurs modes de réalisation, le paramètre théorique d'écoulement du gaz dans la structure poreuse est établi sur la base de la formule (III) :

$$\frac{d_t}{1-d_t} = \frac{\frac{1}{\lambda}\left(\frac{1}{\left(\frac{1}{\lambda}+\frac{4\sigma_P}{r_i}\right)^2}+\frac{G_j k_i}{G_i k_j}\frac{1}{\left(\frac{1}{\lambda}+\frac{4\sigma_P}{r_j}\right)^2}\right)}{\left(\frac{\left(\frac{4\sigma_P}{r_i}\right)}{\left(\frac{1}{\lambda}+\frac{4\sigma_P}{r_i}\right)^2}+\frac{G_j k_i}{G_i k_j}\frac{\left(\frac{4\sigma_P}{r_j}\right)}{\left(\frac{1}{\lambda}+\frac{4\sigma_P}{r_j}\right)^2}\right)} \quad (III)$$

dans laquelle :

$G_i$ et $G_j$ sont un paramètre géométrique macroscopique d'une couche i et respectivement d'une couche j,
$K_i$ et $K_j$ sont la résistivité hydraulique de la couche i et respectivement de la couche j,
$\sigma_P$ est le coefficient de glissement du gaz à l'interface gaz/parois des pores de la structure, et
$r_i$ et $r_j$ les rayons moyens des pores de la couche i et de la couche j, définis sur la base respectivement des formules (IV) et (V) :

$$\frac{1}{r_i} = \frac{1}{4\sigma_P a}\left(1 - \sqrt{\frac{b}{2}\frac{G_j k_i}{G_i k_j}}\right) \quad (IV)$$

et

$$\frac{1}{r_j} = \frac{1}{4\sigma_P a}\left(1 + \sqrt{\frac{b}{2\frac{G_j k_i}{G_i k_j}}}\right) \quad (V)$$

dans lesquelles a et b sont des coefficients qui peuvent être déterminés comme indiqué par la suite.

Selon un ou plusieurs modes de réalisation, les rayons des pores de chaque couche sont des données estimées, qui peuvent être fournies par exemple par le fabricant de la structure poreuse.
Selon un ou plusieurs modes de réalisation, ajuster le modèle d'écoulement du gaz dans la structure poreuse comprend :

- pour plusieurs pressions de référence choisies, déterminer la valeur du libre parcours moyen λ et le paramètre expérimental $\frac{d}{1-d}$;
- déterminer les coefficients a et b en déterminant une droite pour les valeurs du libre parcours moyen A mesurées inférieures à $r_m/4\sigma_P$, où $r_m$ est le plus grand rayon des pores parmi des rayons estimés des pores de chaque couche de la structure poreuse de sorte que $\frac{d}{1-d} = \frac{a}{\lambda} + b$ avec a et b les coefficients de la droite ;
- déterminer le rapport $\frac{G_j}{G_i}\frac{K_i}{K_j}$ pour l'ensemble des valeurs du libre parcours moyen λ, de sorte que le paramètre expérimental $\frac{d}{1-d}$ soit égal au paramètre théorique $\frac{d_t}{1-d_t}$.

Selon un ou plusieurs modes de réalisation, au moins une propriété de l'ensemble des pores de chaque couche comprend les rayons ri et rj des pores de la couche i et respectivement de la couche j de la structure poreuse, les rayons ri et rj étant déterminés à partir du rapport $\frac{G_j}{G_i}\frac{K_i}{K_j}$ déterminé et des coefficients a et b déterminés.

Ainsi, un tel procédé permet d'obtenir de manière non destructive et précise les rayons des pores de chaque couche.

Selon un ou plusieurs modes de réalisation, le procédé permet de caractériser deux couches i et j.

Selon un ou plusieurs modes de réalisation, chaque couche à caractériser comprend un ensemble de pores ayant des propriétés différentes des propriétés des ensembles de pores des autres couches.

Selon une variante, les couches à caractériser ne sont pas en contact.

Selon une variante, les couches à caractériser sont séparées par d'autres couches.

Selon un ou plusieurs modes de réalisation, le procédé comprend en outre les étapes suivantes :

- déterminer, pour chaque pression P mesurée, un paramètre expérimental $KU_P$ de résistivité hydraulique dans la structure poreuse des molécules du gaz à travers les pores, sur la base de la formule (VI)

$$KU_P = \frac{QG}{\Delta P}\sqrt{2R'T} \ (VI)$$

- dans laquelle K est la résistivité hydraulique de la structure poreuse, $U_p$ est la vitesse la plus probable des molécules du gaz, G est un paramètre géométrique macroscopique de la structure poreuse multicouche et R' est la constante spécifique du gaz utilisé considéré comme parfait ;

- pour chaque pression P mesurée, déterminer la valeur du libre parcours moyen $\lambda = \frac{\eta}{P}U_P$ et le paramètre expérimental $KU_P$ de résistivité hydraulique;

- établir, à partir du modèle d'écoulement du gaz, un paramètre théorique $K_tU_P$ de résistivité hydraulique de la structure, dans lequel le paramètre théorique de résistivité hydraulique $K_tU_P$ est déterminé sur la base de la formule (VII)

$$K_tU_P = \frac{\frac{k_iG}{G_i}}{\frac{1}{\left(\frac{1}{\lambda}+\frac{4\sigma_P}{r_i}\right)}+\frac{G_jk_i}{G_ik_j}\frac{1}{\left(\frac{1}{\lambda}+\frac{4\sigma_P}{r_j}\right)}} \quad (VII)$$

- déterminer le rapport $\frac{K_i}{G_i}$ pour l'ensemble des valeurs de $\lambda$, de sorte que le paramètre expérimental $KU_P$ soit égal au paramètre théorique $K_tU_P$ ; et

- déterminer la résistivité hydraulique $K_i$ et $K_j$ de l'ensemble des pores à partir de $\frac{K_i}{G_i}$ ainsi ajustés et $G_i$ et $G_j$ ainsi calculés.

Un tel procédé permet d'obtenir de manière non destructive et précise la résistivité hydraulique $K_i$ de l'ensemble des pores de chaque couche.

Ainsi, les déposants ont observé que dans le cas d'une structure multicouche ayant au moins 2 couches, les paramètres expérimentaux $KU_P$ et $\frac{d}{1-d}$ en fonction du libre parcours moyen ne varient pas linéairement mais varient de manière courbée, en particulier quand les valeurs du libre parcours moyen $\lambda$ mesurées sont supérieures à $r_m/4\sigma_P$. Les déposants ont montré que cette courbure est une information sur l'hétérogénéité de la structure multicouche et que le modèle du procédé de la présente description permet de reproduire parfaitement cette courbure et ainsi d'obtenir de manière précise et non destructive les propriétés des couches de la structure multicouche.

Selon un ou plusieurs modes de réalisation, le procédé comprend la détermination, pour chaque couche de la structure poreuse, du rapport $\varepsilon i/\tau i^2 = 4Ki/ri^2$ avec $\varepsilon i$ la porosité de la couche i de la structure poreuse et $\tau_i$ la tortuosité de la couche i de la structure poreuse. Le rapport $\varepsilon i/\tau i^2$ est un coefficient de structure de la couche i représentatif du transport hydraulique dans la couche i.

Selon un ou plusieurs modes de réalisation, le procédé permet de caractériser deux couches i et j d'une structure poreuse multicouche ayant une pluralité de couches, par exemple deux couches.

Selon un ou plusieurs modes de réalisation, le procédé permet de caractériser deux couches i et j parmi n couches > 2.

Selon un ou plusieurs modes de réalisation, les n-2 couches ont des propriétés connues et des pertes de charges connues. Dans ce cas, la perte de charge du gaz à travers les couches à caractériser de la structure poreuse est égale à la différence entre la perte de charge de la structure poreuse et la perte de charge des n-2 couches, la perte de charge de la structure poreuse étant égale à la différence de pression du gaz en amont de la structure poreuse et la pression du gaz en aval de la structure poreuse.

Selon un ou plusieurs modes de réalisation, la structure poreuse multicouche peut comprendre une pluralité de couches planaires empilées caractérisée par une surface plane S, une épaisseur L et un paramètre géométrique macroscopique G=L/S. Chaque couche i de la structure poreuse multicouche peut être en forme de plaque avec une surface S, une épaisseur Li et un paramètre géométrique macroscopique Gi=Li/S. Les paramètres S, L, Li sont connus sur la base de la méthode de fabrication de la structure ou sont mesurables par des techniques métrologiques standards et adéquates tels que l'utilisation d'un pied à coulisse, des techniques de visualisation optique ou tout système métrologique qui permet une mesure précise de ces paramètres. D'autre part, si Li est une inconnue, $G_i/k_i$ peut être déterminé par la méthode.

A titre illustratif, une structure poreuse multicouche planaire peut être une membrane, un filtre, ou tout autre milieu poreux.

Selon un ou plusieurs modes de réalisation, chaque couche peut avoir une épaisseur différente des épaisseurs des autres couches.

Selon un ou plusieurs modes de réalisation, la structure poreuse peut, par exemple, comprendre une pluralité de couches en forme de cylindres concentriques.

Selon un ou plusieurs modes de réalisation, le paramètre géométrique macroscopique de chaque couche cylindrique peut être Gi égale à $\frac{1}{2\pi H_i}\ln\left(\frac{D_{ext_i}}{D_{int_i}}\right)$ avec $D_{ext_i}$, et $D_{int_i}$ le diamètre extérieur et respectivement intérieur et $H_i$ la longueur de la couche cylindrique i.

Les paramètres $H_i, D_{int_i}$, $D_{ext_i}$, sont mesurables par des techniques métrologiques standards et adéquates tels que l'utilisation d'un pied à coulisse, de techniques de visualisation optique ou tout système métrologique qui permet une mesure de longueur précise.

A titre illustratif, une structure poreuse multicouche cylindrique peut être une fibre creuse, une membrane de géométrie tubulaire ou un monolithe filtrant.

Selon un ou plusieurs modes de réalisation, chaque couche peut avoir un diamètre interne et/ou un diamètre externe différent des autres couches.

Indépendamment de la forme de la structure poreuse, celle-ci peut être réalisée selon un ou plusieurs des modes de réalisation décrits ci-dessous.

Selon un ou plusieurs modes de réalisation, la structure poreuse multicouche peut être en matériau sélectionné dans le groupe comprenant la céramique, les poudres, et plus généralement les matériaux frittés ou « moussés » de toute nature.

Selon un ou plusieurs modes de réalisation, chaque couche de la structure poreuse multicouche est constituée d'un seul matériau.

Selon un ou plusieurs modes de réalisation, le matériau de chaque couche de la structure poreuse multicouche est le même.

Selon un ou plusieurs modes de réalisation, chaque couche à une épaisseur comprise entre une dizaine de $\mu$m et quelques mm, par exemple une première couche d'une épaisseur de 1,7mm et une deuxième couche d'une épaisseur de 30$\mu$m.

Selon un ou plusieurs modes de réalisation, le rapport $\frac{G_j k_i}{G_i k_j}$ est égale environs à 1.

Comme expliqué, selon un ou plusieurs modes de réalisation, chaque couche de la structure poreuse multicouche peut être homogène. Cependant, selon un ou plusieurs modes de réalisation, chaque couche de la structure poreuse multicouche peut être hétérogène.

Selon un deuxième aspect, les avantages précités, ainsi que d'autres avantages, peuvent être obtenus par un système de caractérisation en milieu gazeux raréfié d'une structure poreuse multicouche permettant une communication fluidique entre les couches, dans laquelle chaque couche comprend un ensemble de pores, le système comprenant :

- un moyen d'écoulement d'un gaz à travers les pores de la structure poreuse;
- un moyen de mesure de l'évolution temporelle de la pression du gaz en amont de la structure ;
- un moyen de mesure de l'évolution temporelle de la pression du gaz en aval de la structure ; et
- un ordinateur pour :
- ajuster un modèle d'écoulement du gaz dans la structure poreuse sur la base d'une courbe expérimentale d'un paramètre expérimental d'écoulement du gaz dans la structure poreuse tracée à partir des mesures de l'évolution temporelle desdites pressions du gaz en amont et en aval de la structure poreuse,

  - établir le modèle d'écoulement du gaz dans la structure poreuse prenant en compte la vitesse de glissement du gaz aux parois des pores et assumant que la perte de charge du gaz à travers la structure poreuse soit égale à la somme des pertes de charge du gaz à travers chaque couche de la structure poreuse; et

- déterminer au moins une propriété de l'ensemble des pores de chaque couche à partir du modèle d'écoulement du gaz ainsi ajusté.

Selon un ou plusieurs modes de réalisation, le système comprend :

- un moyen d'écoulement d'un gaz à travers les pores de la structure poreuse;
- un moyen de mesure de l'évolution temporelle de la pression du gaz en amont de la structure ;
- un moyen de mesure de l'évolution temporelle de la pression du gaz en aval de la structure ; et
- un ordinateur pour :

  - déterminer un paramètre expérimental d'écoulement du gaz dans la structure poreuse en fonction du libre parcours moyen ($\lambda$) des molécules du gaz à travers les pores de la structure poreuse à partir des mesures de l'évolution temporelle desdites pressions du gaz en amont et en aval de la structure poreuse ;
  - établir un modèle d'écoulement du gaz dans la structure poreuse, le modèle prenant en compte la vitesse de glissement du gaz à l'interface gaz/parois des pores chaque couche de la structure poreuse et assumant que la perte de charge du gaz à travers la structure poreuse soit égale à la somme des pertes de charge du gaz à travers chaque couche de la structure poreuse;
  - établir, à partir du modèle d'écoulement du gaz dans la structure poreuse, un paramètre théorique d'écoulement du gaz dans la structure dépendant du libre parcours moyen ($\lambda$) des molécules du gaz à travers les pores de la structure poreuse;
  - ajuster le modèle d'écoulement du gaz dans la structure poreuse de sorte que le paramètre expérimental soit égal au paramètre théorique ; et
  - déterminer au moins une propriété de l'ensemble des pores de chaque couche à partir du modèle ajusté.

Selon un ou plusieurs modes de réalisation, pour mesurer la pression en aval de la structure poreuse, écouler à travers la structure poreuse peut être effectué de sorte à remplir un volume fermé situé en aval de la structure poreuse.
Selon un ou plusieurs modes de réalisation, le moyen d'écoulement comprend une tuyère assurant l'écoulement du gaz dans la structure avec un débit constant.
Selon un ou plusieurs modes de réalisations, le gaz s'écoule à travers les pores de la structure poreuse à une température constante et à un débit constant. Ce mode de réalisation permet de caractériser la structure poreuse de manière plus précise en diminuant le nombre de facteur non contrôlé dans le procédé.
Selon un ou plusieurs modes de réalisations, la pression du gaz en contact avec la surface amont de la structure poreuse est homogène sur toute la surface.
Selon un troisième aspect, les objets précités, ainsi que d'autres avantages, sont obtenus par une utilisation du procédé selon le premier aspect pour application en mesure de porométrie, en caractérisation de membrane, en caractérisation de plâtre, de pot catalytique, de béton ou de ciment, par exemple dans la cadre de contrôle qualité en série, ou pour optimisation du procédé d'obtention ou pour application en biomédicale.
Des modes de réalisation selon les aspects référencés ci-dessus ainsi que des avantages supplémentaires apparaîtront à la lecture de la description illustrée par les figures suivantes et les revendications annexées.

## BREVE DESCRIPTION DES DESSINS

Les FIGS.1A et 1B représentent de manière schématique deux exemples de représentation de modèle de structure poreuse multicouche dont les couches peuvent être caractérisées par un ou plusieurs modes de réalisation du procédé selon la présente description.
La FIG.2 représente de manière schématique un mode de réalisation du système de caractérisation en milieu gazeux raréfié de couches d'une structure poreuse multicouche.
Les FIGS. 3A à 3D montrent des exemples de données expérimentales mesurées par le système de la FIG.2.
Les FIGS.4A à 4D montrent des exemples de détermination des paramètres expérimentaux et d'ajustement du modèle d'écoulement du gaz selon un exemple de procédé de la présente description.

## DESCRIPTION DETAILLEE

Des modes de réalisation de la présente description ont été et vont être décrits en détail. Dans la description détaillée suivante des modes de réalisation du procédé et du système de caractérisation, de nombreux détails spécifiques sont exposés afin de fournir une compréhension plus approfondie de la présente description. Cependant, il apparaîtra à l'homme du métier que la présente description peut être mise en oeuvre sans ces détails spécifiques. Dans d'autres cas, des caractéristiques bien connues n'ont pas été décrites en détail pour éviter de compliquer inutilement la description.

Dans la présente description et dans le précédent résumé, le terme « comprendre » est synonyme de (signifie la même chose que) « inclure » et « contenir », et est inclusif ou ouverts et n'exclue pas d'autres éléments non récités. En outre, dans la présente description, les termes « environ », « substantiellement », « sensiblement » et « à peu près » sont synonymes de (signifie la même chose que) une marge inférieure et/ou supérieure de 10% de la valeur respective.

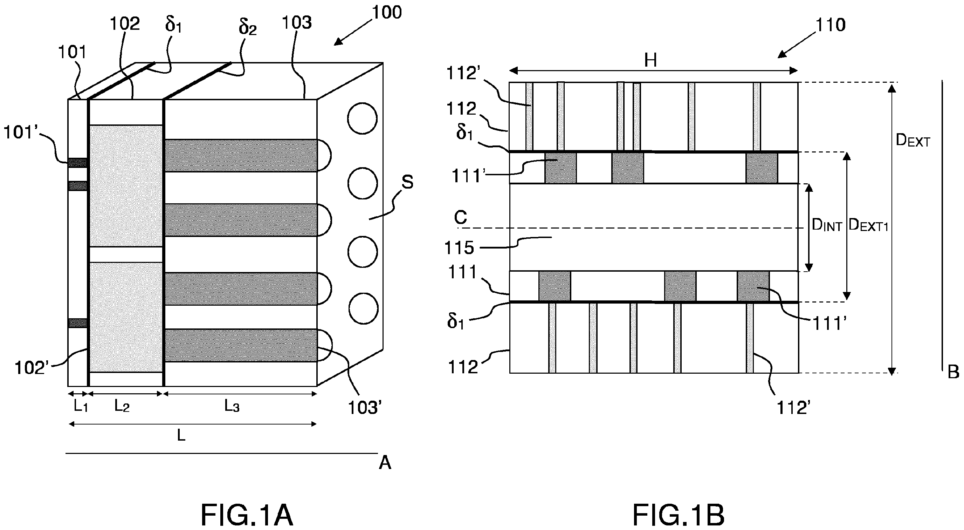

Deux exemples de représentation de modèle de structure poreuse multicouche dont les couches peuvent être caractérisées par un ou plusieurs modes de réalisation du procédé selon la présente description sont montrés dans les FIGS.1 A et 1B. Sur ces deux représentations, les pores sont linéaires et perpendiculaire à la surface de la structure, c'est-à-dire $\tau = 1$.

La FIG. 1A représente un exemple de modèle de structure poreuse multicouche 100 avec une surface plane S, une épaisseur L et un paramètre géométrique macroscopique G=L/S. La structure poreuse multicouche planaire 100 comprend trois couches 101, 102, 103 planaires empilées ayant chacune des surfaces S1, S2, S3 identiques égales à S et des épaisseurs respectivement égales à L1, L2 et L3 dont la somme est égale à L. Les paramètres L, S, L1, L2 et L3 sont des paramètres mesurables. Le paramètre géométrique macroscopique des couches planaires 101, 102, 103 est respectivement G1=L1/S, G2=L2/S et G3=L3/S.

Chaque couche comprend un ensemble de pores 101', 102' et 103'. L'ensemble de pores de chaque couche peut présenter des propriétés différentes des propriétés des ensembles des pores des autres couches. Les propriétés peuvent comprendre, par exemple, le rayon des pores, la tortuosité des pores, la résistivité de la couche, la porosité de la couche et toutes combinaisons des propriétés précitées.

Les ensembles des pores 101', 102' et 103' représentés sur la FIG.1A ont chacun des rayons différents. Les pores représentés sur cette figure sont linéaires et perpendiculaire à la surface de la structure pour simplifier leur représentation ; dans la réalité, les pores peuvent présenter une tortuosité plus importante, c'est-à-dire $\tau > 1$.

Les couches 101 et 102, 103 sont espacées par un espacement $\delta_1$ et les couches 102 et 103 sont espacées par un espacement $\delta_2$. Les espacements $\delta_1$ et $\delta_2$ permettent la communication fluidique entre les couches. Par la suite, on considère que l'espacement $\delta$ tend vers 0 et qu'il n'intervient pas dans les pertes de charge du gaz dans la structure poreuse.

La pression du gaz incident en contact avec la surface externe de la couche 101 peut être homogène sur toute la surface.

Selon un mode réalisation, pour caractériser une telle structure avec trois couches, les propriétés d'une des couches sont connues.

La FIG. 1B représente un exemple de modèle de structure poreuse multicouche cylindrique 110, c'est-à-dire qui comprend une pluralité de couches en forme de cylindres concentriques. La structure poreuse cylindrique 110 est définie avec un diamètre intérieur $D_{int}$, un diamètre externe $D_{ext}$, une longueur H et un paramètre géométrique macroscopique $G = \frac{1}{2\pi H} \ln\left(\frac{D_{ext}}{D_{int}}\right)$.

La structure poreuse multicouche cylindrique 110 comprend deux couches 111, 112, cylindriques concentriques ayant des longueurs identiques égales à H. Le diamètre interne de la couche 111 $D_{int1}$ (non référencé sur la figure 1B) est égal au diamètre interne de la structure poreuse $D_{int}$, le diamètre externe de la couche 101 $D_{ext1}$ est égal au diamètre interne de la couche 112 $D_{ext2}$ (non référencé sur la figure 1B), et le diamètre externe de la couche 112 (non référencé sur la figure 1B) est égal au diamètre externe de la structure poreuse $D_{ext}$. Le paramètre géométrique macroscopique des couches cylindriques 111, 112 est respectivement $G_1 = \frac{1}{2\pi H}\ln\left(\frac{D_{ext_1}}{D_{int_1}}\right) = \frac{1}{2\pi H}\ln\left(\frac{D_{ext_1}}{D_{int}}\right)$ et

$G_2 = \frac{1}{2\pi H}\ln\left(\frac{D_{ext_2}}{D_{int_2}}\right) = \frac{1}{2\pi H}\ln\left(\frac{D_{ext}}{D_{ext_1}}\right)$. Les paramètres $D_{int}$, $D_{ext}$, H, $D_{ext_1}$ sont connus ou sont mesurables par des techniques métrologiques standards et adéquates tels que l'utilisation d'un pied à coulisse, des techniques de visualisation optique ou tout système métrologique qui permet une mesure précise de ces paramètres. tels que, par exemple, l'utilisation d'un pied à coulisse ou autres techniques métrologique tel que les techniques optiques.

Les couches 111 et 112 sont espacées par un espacement $\delta_1$. L'espacement $\delta_1$ permet la communication fluidique entre les couches. Par la suite, on considère que l'espacement $\delta$ tend vers 0 et qu'il n'intervient pas dans les pertes de charge du gaz dans la structure poreuse.

La pression du gaz incident en contact avec la surface externe de la couche 111 peut être homogène sur toute la surface.

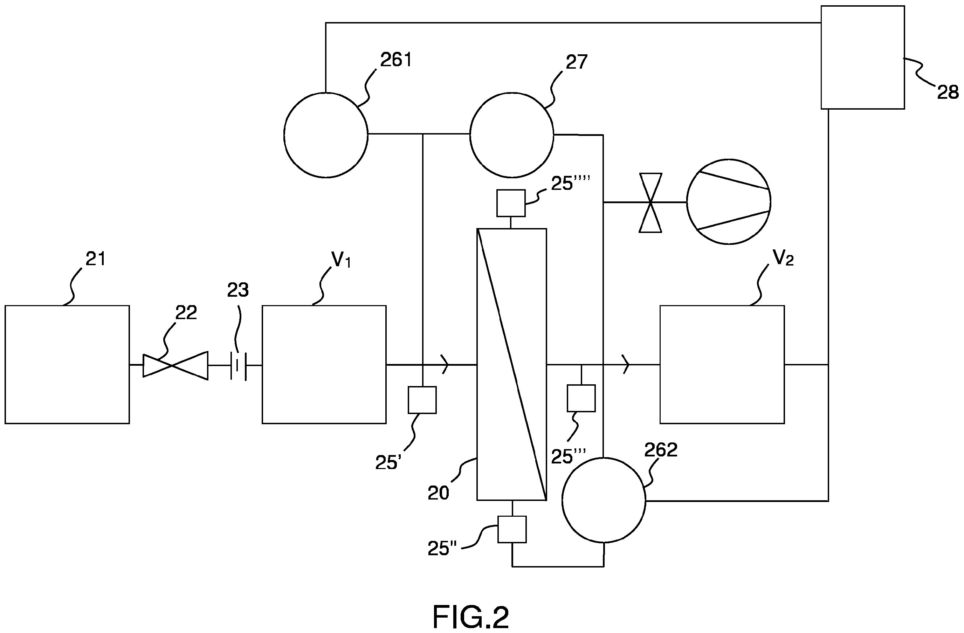

La FIG.2 représente de manière schématique un exemple de système de caractérisation en milieu gazeux raréfié de couches d'une structure poreuse multicouche 20 selon la présente description en faisant s'écouler un gaz dans la structure poreuse, en particulier un gaz. Dans cet exemple, le système comprend deux réservoirs V1 et V2, respectivement en amont et en aval de la structure poreuse multicouche 20 à caractériser. Un gaz, provenant du réservoir V1 remplit le réservoir V2 en traversant la structure poreuse multicouche. Ainsi le réservoir V1 est un réservoir ouvert et le réservoir V2 est un réservoir fermé car le gaz accumulé dans le réservoir V2 ne ressort pas. L'ensemble des deux réservoirs est rempli de manière contrôlée, c'est-à-dire avec un débit constant. Pour cela, une pression $P_0$ est imposée par un détendeur 22 à la sortie d'une bouteille de gaz 21 en amont d'une tuyère 23 placée à l'entrée d'un réservoir V1. Pour avoir ainsi un remplissage des réservoirs (V1+V2) à débit constant, la tuyère 23 est dans un régime sonique tant que la pression en aval de la tuyère P1 ne dépasse pas la pression critique $P_c = P_0 \left(2/\gamma + 1\right)^{\gamma/\gamma-1}$, où $\gamma$ est l'indice adiabatique du gaz et Po est la pression en amont de la tuyère. Ainsi, le gaz parcourt le premier réservoir $V_1$, traverse la structure poreuse multicouche à caractériser et remplit le second réservoir $V_2$.

Selon un mode réalisation, la bouteille de gaz 21 et le détenteur 22 peuvent ne pas faire partie du système.

Plusieurs thermocouples 25', 25", 25''' peuvent être disposés dans le système pour vérifier que la température reste raisonnablement constante tout le long de la durée de l'expérience. Les thermocouples peuvent avoir par exemple une précision de 0.1K avec une résolution de 0.05K.

Plusieurs capteurs de pression 261, 262 peuvent être disposés dans le système en particulier en amont et en aval de la structure poreuse multicouche à caractériser. Les capteurs de pression peuvent avoir par exemple une précision d'étalonnage de $\delta P$ de 3mbar avec une résolution de 0.5mbar pour une pression mesurée comprise entre 0 et 30bar ou un d'étalonnage de $\delta P$ de 0.05mbar avec une résolution de 0.01mbar pour une pression mesurée comprise entre 0 et 0.5bar. Il est également possible, en complément, pour mesurer le différentiel de pression à travers la structure poreuse multicouche, d'utiliser un capteur de pression différentiel 27 qui permet de mesurer la différence de pression avec plus de précision. Selon une variante, le système peut être équipé de différents modèles de capteurs différentiels pouvant mesurer des différences de pression de 0 à 7 mbar, 0 à 60 mbar et 0 à 600 mbar avec une précision $\delta \Delta P = 0.075\%$ de l'échelle de mesure pour une résolution de 0.075% de l'échelle de mesure (1 mbar = 100 Pa).

La structure poreuse multicouche à caractériser peut se trouver dans un carter de type industriel et être ainsi aisément accessible de manière à permettre les changements fréquents d'échantillons de manière peu contraignante.

Selon un ou plusieurs modes de réalisation, le système comprend en outre une unité de commande 28 électrique et/ou d'automatisation. L'unité de commande peut permettre d'enregistrer en fonction du temps, la température, la pression du gaz en aval et en amont de la structure poreuse multicouche et/ou le différentiel de pression avec une fréquence variable. La fréquence doit être assez élevée pour avoir une bonne résolution en pression, cela peut dépendre de la vitesse de montée en pression, donc du débit. L'unité de commande électrique permet de piloter selon un ou plusieurs modes de réalisation (i) le contrôle du débit (ii) la mesure des pressions et de la température (iii) le traitement des acquisitions.

L'unité de commande peut être un ordinateur, un réseau informatique ou tout autre dispositif qui comprend un processeur, une mémoire locale et/ou un stockage de données local ou distant. Le support de stockage et / ou la mémoire locale peuvent contenir des instructions qui, lorsqu'elles sont exécutées par l'unité de commande, amènent le système à exécuter un ou plusieurs exemples des commandes décrites ci-dessus.

Ainsi, le système peut mesurer des pressions et des différences de pression au court du remplissage du système, de préférence à débit constant et à température constante, dans une durée allant de quelques dizaines de minutes à 2 heures selon le débit imposé. Le débit imposé est suffisamment petit pour qu'il n'y ait pas d'effet inertiel, c'est-à-dire un débit massique par unité de surface inférieur au débit massique par unité de surface maximum tel que les effets inertiels soient négligeables, par exemple un débit surfacique compris entre $10^{-3}$ et $5 \times 10^{-3}$ Kg.s$^{-1}$.m$^{-2}$.

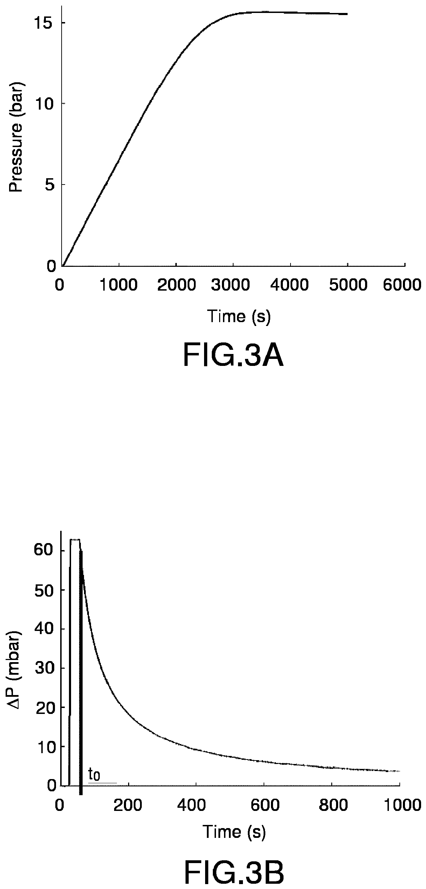

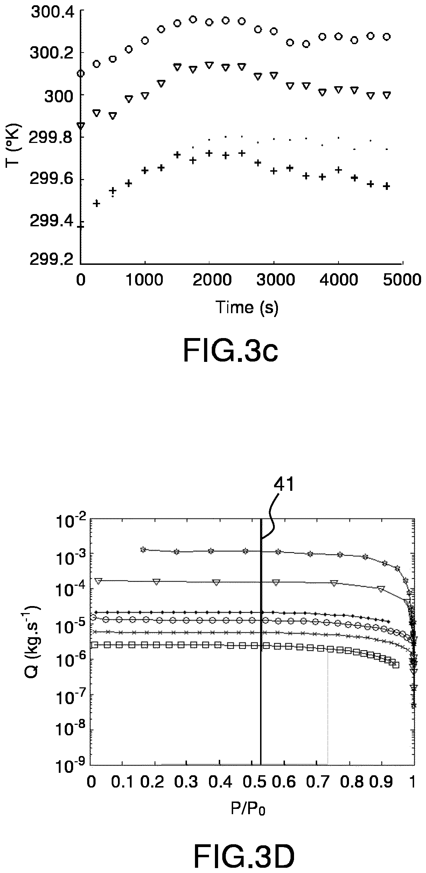

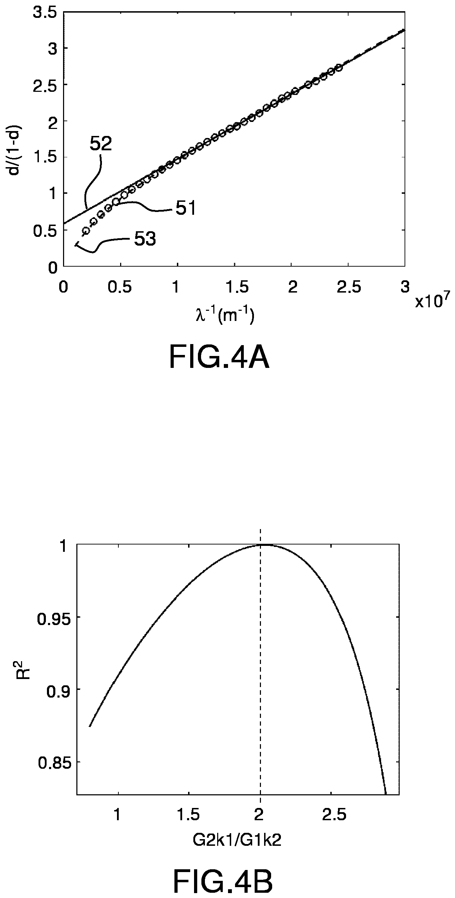

Les FIGS. 3A à 3D montrent des exemples de données expérimentales mesurées par le système de la FIG.2. La FIG. 3A présente des mesures de la pression en aval de la structure poreuse à caractériser en fonction du temps au cours du remplissage du système. Par remplissage du système, on entend remplissage des réservoirs V1 et V2 à travers la structure poreuse. Sur la FIG.3A, la pression augmente jusqu'à atteindre un palier quand le système est rempli. La FIG.3B présente des mesures du différentiel de pression entre la pression en amont et en aval de la structure poreuse à caractériser en fonction du temps au cours du remplissage du système. Sur la FIG.4B, le différentiel de pression diminue au cours du remplissage. $t_0$ correspond au temps à partir duquel les données expérimentales sont exploitables et exploitées. La FIG.3C présente des mesures de températures en fonction du temps au cours du remplissage du système à différentes position dans le système. Dans cet exemple, la structure poreuse est un tube vertical, le gaz est injecté à l'intérieur du tube par en bas. Le capteur « + » est placée en bas du tube et à l'intérieur du tube; le capteur « O » est placée en haut du tube et à l'intérieur du tube ; le capteur « V » est placé en aval du tube et à l'extérieur du tube ; et le capteur « • » est placé en amont du tube et à l'extérieur du tube.. Sur la FIG.3C, la température reste constante au cours du remplissage à plus ou moins 0.4 K. La FIG.3D présente des mesures de débit en aval de la structure poreuse, au cours du remplissage pour différentes ouvertures de la tuyère allant de 0,005mm à 0,737mm et différentes pressions $P_0$ allant de 7,3 bar à 17 bar. Sur la FIG.3D, le débit est compris entre $10^{-6}$ Kg.s$^{-1}$ et $10^{-3}$ Kg.s$^{-1}$ et reste

constant à plus ou moins 15% La fin de l'acquisition des données expérimentales se termine soit quand le débit n'est plus constant soit quand *ΔP* devient trop petit par rapport à son erreur, c'est-à-dire inférieur à *1%*. Cette limite est représenté par le trait vertical 41. On peut ainsi obtenir des données expérimentales jusqu'à environ 10 bars sur cet exemple (1 bar = 100 kPa).

Tout au long de la caractérisation, le débit peut être contrôlé et calculé à partir des mesures de pression et de température sur la base de la formule (VIII) mentionnée plus bas. La constance du débit est un des critères qui assure la précision de la caractérisation.

Une fois le débit assuré constant sur une plage de données connue en utilisant la formule (VIII), plusieurs paramètres expérimentaux peuvent être calculés en fonction du temps comme le libre parcours moyen λ en utilisant la formule (IX), la résistivité hydraulique K en utilisant la formule (X) et la vitesse la plus probable des molécules du gaz Up en utilisant la formule (XI).

$$Q = \frac{V_2}{R'T}\frac{\partial P}{\partial t} \;\; (VIII) \;\; \lambda = \frac{\eta}{P}\sqrt{2R'T} \;\; (IX$$

$$\lambda = \frac{\eta}{P}\sqrt{2R'T} \;\; (IX)$$

$$K = \frac{QG}{\Delta P} \;\; (X)$$

$$U_P = \sqrt{2R'T} \;\; (XI)$$

avec $\eta$ la viscosité, R' la constante spécifique du gaz utilisé considéré comme parfait. On obtient $\eta$ et R' à l'aide de base de données dédiées.

Selon un mode de réalisation, les différentes étapes du procédé de caractérisation en milieu gazeux raréfié de couches d'une structure poreuse multicouche selon la présente description peuvent être les suivantes.

La première étape consiste à écouler un gaz à travers les pores de la structure poreuse, préférentiellement à une température constante (T) et à un débit constant (Q) comme décrit précédemment avec les FIGS.1A, 1B et 2.

La deuxième étape consiste à mesurer l'évolution temporelle de la pression du gaz en amont de la structure poreuse et l'évolution temporelle de la pression du gaz en aval de la structure poreuse comme décrit précédemment avec la FIG.2.

La troisième étape consiste à déterminer un paramètre expérimental d'écoulement du gaz dans la structure poreuse en fonction du libre parcours moyen (λ) des molécules du gaz à travers les pores de la structure poreuse à partir des mesures de l'évolution temporelle des dites pressions du gaz en amont et en aval de la structure poreuse.

Selon un ou plusieurs modes de réalisations, le paramètre expérimental de la troisième étape est $\frac{d}{1-d}$ . Il peut être déterminé sur la base de la formule (I)

$$\frac{\Delta P|_{P=P_{ref}}}{\Delta P} = \left(\frac{P}{P_{ref}}\right)^{d} \;\; (I)$$

dans laquelle $P_{ref}$ est une pression de référence, P est la pression du gaz en aval de la structure poreuse et ΔP est la perte de charge du gaz à travers les couches à caractériser de la structure poreuse. Le libre parcours moyen (λ) des molécules du gaz à travers les pores de la structure poreuse est déterminé sur la base de la formule (II):

$$\lambda = \frac{\eta}{P_{ref}} U_P \;\; (II)$$

dans laquelle $\eta$ est la viscosité dynamique du gaz et Up est la vitesse la plus probable des molécules du gaz. Pour une pression de référence, un paramètre expérimental $\dfrac{d}{1-d}$ est associé à un libre parcours moyen ($\lambda$).

Selon un ou plusieurs modes de réalisation, cette troisième étape peut comprendre les étapes suivantes pour déterminer le paramètre expérimental $\dfrac{d}{1-d}$ en fonction du libre parcours moyen:

- fixer une gamme de valeur pour la pression de référence telle que par exemple plus ou moins 20%, ou par exemple $P_{min} * 1.25 < P_{ref} < P_{max} * 0.83$ ;
- associer à chaque valeur de la pression de référence, la valeur du libre parcours moyen correspondant, d'après la formule (II);
- pour chaque pression de référence, traiter les données de pression au voisinage de sa valeur par exemple + ou - 20% tel que $P_{ref} * 0.8 < P < P_{ref} * 1.2$, en calculant $\dfrac{\Delta P|_{Pref}}{\Delta P}$ et $\left(\dfrac{P}{P_{ref}}\right)^d$. Pour d compris entre 0 et 1 ;

ou une régression linéaire selon $\dfrac{\Delta P|_{P=P_{ref}}}{\Delta P} = d\,\dfrac{P}{P_{ref}} + 1 - d$ ;

L'écart entre les données de pression au voisinage de la pression de référence est facteur déterminant la précision de la caractérisation.

- retenir la valeur de $d$ qui minimise les écarts entre $\dfrac{\Delta P|_{Pref}}{\Delta P}$ et $\left(\dfrac{P}{P_{ref}}\right)^d$. Ainsi, une valeur $\dfrac{d}{1-d}$ optimale est calculée pour chaque pression de référence et ainsi pour chaque valeur du libre parcours moyen correspondant. Pour minimiser les écarts entre le modèle et l'expérience, on peut utiliser la méthode connue « des moindres carrés ».

Selon un ou plusieurs modes de réalisation, la quatrième étape consiste à établir, à partir d'un modèle d'écoulement du gaz dans la structure poreuse, un paramètre théorique d'écoulement du gaz dans la structure en fonction du libre parcours moyen ($\lambda$) des molécules du gaz à travers les pores de la structure poreuse.

Les déposants ont montré qu'en établissant un modèle d'écoulement du gaz dans la structure poreuse prenant en compte la vitesse de glissement du gaz à l'interface gaz/parois des pores de chaque couche de la structure poreuse et assumant que la perte de charge du gaz à travers la structure poreuse soit égale à la somme des pertes de charge du gaz à travers chaque couche de la structure poreuse, permet d'obtenir les propriétés des couches d'une structure poreuse multicouche à caractériser de manière précise.

Selon un ou plusieurs modes de réalisations, le paramètre théorique d'écoulement du gaz dans la structure poreuse est $\dfrac{d_t}{1-d_t}$. Le paramètre théorique d'écoulement du gaz $\dfrac{d_t}{1-d_t}$ dans la structure poreuse est établi sur la base de la formule (III) :

$$\frac{d_t}{1-d_t} = \frac{\frac{1}{\lambda}\left(\dfrac{1}{\left(\frac{1}{\lambda}+\frac{4\sigma_P}{r_i}\right)^2}+\dfrac{G_j k_i}{G_i k_j}\dfrac{1}{\left(\frac{1}{\lambda}+\frac{4\sigma_P}{r_j}\right)^2}\right)}{\left(\dfrac{\left(\frac{4\sigma_P}{r_i}\right)}{\left(\frac{1}{\lambda}+\frac{4\sigma_P}{r_i}\right)^2}+\dfrac{G_j k_i}{G_i k_j}\dfrac{\left(\frac{4\sigma_P}{r_j}\right)}{\left(\frac{1}{\lambda}+\frac{4\sigma_P}{r_j}\right)^2}\right)}\quad (\text{III})$$

dans laquelle :

$G_i$ et $G_j$ sont un paramètre géométrique macroscopique d'une couche i et respectivement d'une couche j,
$K_i$ et $K_j$ sont la résistivité hydraulique de la couche i et respectivement de la couche j,
$\sigma_P$ est le coefficient de glissement du gaz à l'interface gaz/parois des pores de la structure et

$r_i$ et $r_j$ sont les rayons respectivement de la couche i et j et sont définis sur la base respectivement des formules (IV) et (V) :

$$\frac{1}{r_i} = \frac{1}{4\sigma_P a}\left(1 - \sqrt{\frac{b}{2}\frac{G_j k_i}{G_i k_j}}\right) \qquad \text{(IV)}$$

et

$$\frac{1}{r_j} = \frac{1}{4\sigma_P a}\left(1 + \sqrt{\frac{b}{2\frac{G_j k_i}{G_i k_j}}}\right) \qquad \text{(V)}$$

dans lesquelles a et b sont des coefficients qui peuvent être déterminés comme indiqué par la suite.

Le coefficient de glissement du gaz $\sigma_P$ à l'interface gaz/parois des pores de la structure est un paramètre référencé dans la littérature (W.-M. Zhang, G. Meng, X. Wei, A review on slip models for gas microflows, Microfluidics and Nanofluidics 13 (6) (2012) 845-882.doi:10.1007/s10404-012-1012-9) il va dépendre notamment du matériau de la phase solide du poreux à caractériser.

Selon un mode de réalisation, quand le matériau de chaque couche de la structure poreuse est différent, il faut introduire un coefficient de glissement du gaz pour chacune des couches.

Selon un mode de réalisation, quand le matériau de chaque couche de la structure poreuse est identique, le coefficient de glissement du gaz est identique pour chacune des couches, même si les propriétés des ensembles de pores de chaque couche sont différentes.

La cinquième étape consiste à ajuster le modèle d'écoulement du gaz dans la structure poreuse de sorte que le paramètre expérimental soit égal au paramètre théorique.

Selon un ou plusieurs modes de réalisation, la cinquième étape comprend les étapes suivantes :

- pour plusieurs pressions de référence choisies, déterminer la valeur du libre parcours moyen $\lambda$ et le paramètre expérimental $\frac{d}{1-d}$;

- déterminer les coefficients a et b en déterminant une droite pour les plus grandes valeurs de $1/\lambda$ mesurées de sorte que $\frac{d}{1-d} = \frac{a}{\lambda} + b$ avec a et b les coefficients de la droite. Les plus grandes valeurs de $1/\lambda$ mesurées signifie les valeurs du libre parcours moyen $\lambda$ mesurées inférieures à, autrement dit petites devant, $r_m/4\sigma_P$, où $r_m$ est le plus grand rayon des pores parmi des rayons estimés des pores de chaque couche de la structure poreuse. En pratique, on observe la courbe suivre une loi linéaire pour $\lambda$ suffisamment petit, c'est-à-dire par exemple $\lambda < 5*4\sigma_P/rm$. Théoriquement la linéarité de la courbe arrive quand il ne reste qu'une couche dans laquelle les effets raréfiés sont importants. Les rayons de pore estimés de chaque couche sont des données estimées qui peuvent être fournies par exemple par le fabricant de la structure poreuse. La FIG.4A illustre cette étape. La FIG. 4A montre une courbe 51 représentant le paramètre expérimental $\frac{d}{1-d}$ en fonction de l'inverse du libre parcours moyen $\lambda$. Sur la courbe 51 est superposée une courbe 52 représentant la droite ajustée avec les coefficients a et b pour des valeurs de l'inverse du libre parcours moyen $\lambda$ supérieur à $1*10^7$ m$^{-1}$.

- déterminer le rapport $\frac{G_j}{G_i}\frac{K_i}{K_j}$ pour l'ensemble des valeurs du libre parcours moyen $\lambda$, de sorte que le paramètre expérimental $\frac{d}{1-d}$ soit égal au paramètre théorique $\frac{d_t}{1-d_t}$.

Selon un ou plusieurs modes de réalisation, la cinquième étape peut comprendre les étapes suivantes pour déterminer le rapport $\frac{G_j}{G_i}\frac{K_i}{K_j}$ :

- fixer arbitrairement une gamme de valeur pour le rapport *GjKi/KjGi,* par exemple :

$$0.1 < \frac{GjKi}{KjGi} < 10$$

- pour chaque valeur de *GjKi/KjGi,* calculer 1/ri et 1/rj en utilisant les formules (V) et (VI) ;

- pour chaque valeur de *GjKi/KjGi,* calculer $\frac{d_t}{1-d_t}$ d'après la formule (IV) ;

- retenir la valeur de *GjKi/KjGi* qui minimise les écarts entre le paramètre théorique $\frac{d_t}{1-d_t}$ et le paramètre expérimental $\frac{d}{1-d}$.

Pour minimiser les écarts, on peut utiliser la méthode connue « des moindres carrés » qui utilise un coefficient de corrélation $R^2$ en fonction de la valeur à ajuster. Ainsi, la valeur maximale de $R^2$ correspond à une valeur du paramètre à ajuster permettant le minimum d'écart entre le paramètre théorique et le paramètre expérimental. La FIG.4B illustre cette méthode et la courbe 53 de la FIG.4A présente la courbe théorique obtenue à partie du résultat de la FIG.4B. La sixième étape consiste à déterminer au moins une propriété de l'ensemble des pores de chaque couche à partir du modèle d'écoulement du gaz ajusté.

Selon un ou plusieurs modes de réalisation, au moins une propriété de l'ensemble des pores de chaque couche comprend les rayons ri et rj des pores de la couche i et respectivement de la couche j de la structure poreuse, les rayons ri et rj étant déterminés à partir du rapport $\frac{G_j}{G_i}\frac{K_i}{K_j}$ déterminé et des coefficients a et b déterminés.

Selon un ou plusieurs modes de réalisation, l'étape suivante peut consister à :

- déterminer, pour chaque pression P mesurée, un paramètre expérimental $KU_P$ de résistivité hydraulique dans la structure poreuse des molécules du gaz à travers les pores, sur la base de la formule (VI)

$$KU_P = \frac{QG}{\Delta P}\sqrt{2R'T} \ (\text{VI})$$

dans laquelle K est la résistivité hydraulique de la structure poreuse, $U_p$ est la vitesse la plus probable des molécules du gaz, G est un paramètre géométrique macroscopique de la structure poreuse multicouche et R' est la constante spécifique du gaz utilisé considéré comme parfait ;

- pour chaque pression P mesurée, déterminer la valeur du libre parcours moyen A et le paramètre expérimental $KU_P$ de résistivité hydraulique; et

- établir, à partir du modèle d'écoulement du gaz, un paramètre théorique $K_tU_P$ de résistivité hydraulique de la structure, dans lequel le paramètre théorique de résistivité hydraulique $K_tU_P$ est déterminé sur la base de la formule (VII) :

$$K_tU_P = \frac{\frac{k_iG}{G_i}}{\frac{1}{\left(\frac{1}{\lambda}+\frac{4\sigma P}{r_i}\right)}+\frac{G_jk_i}{G_ik_j}\frac{1}{\left(\frac{1}{\lambda}+\frac{4\sigma P}{r_j}\right)}} \quad (\text{VII})$$

- déterminer le rapport $\frac{K_i}{G_i}$ pour l'ensemble des valeurs de λ, de sorte que le paramètre expérimental $KU_P$ soit égal au paramètre théorique $K_tU_P$ ; et

- déterminer la résistivité hydraulique $K_i$ et Kj de l'ensemble des pores à partir de $\frac{K_i}{G_i}$ ainsi ajustés et Gi et Gj calculés.

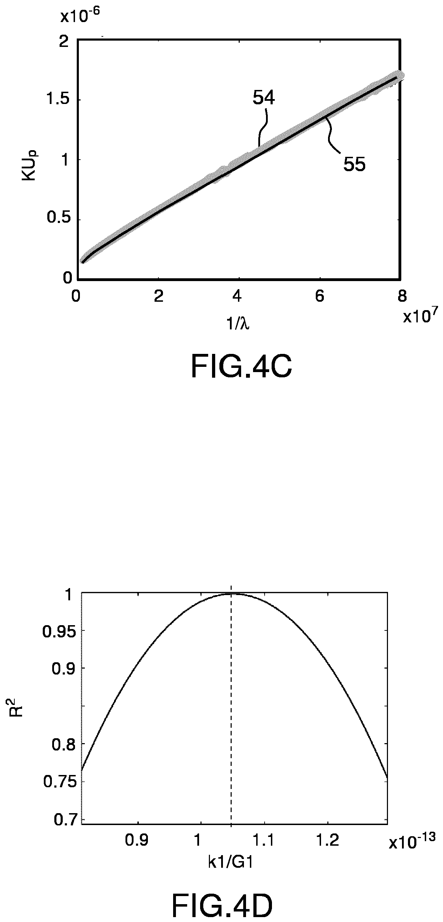

La FIG.4C illustre cette étape. La FIG. 4C montre une courbe mesurée 54 représentant le paramètre expérimental KUp en fonction de l'inverse du libre parcours moyen A. Sur la courbe 54 est superposée une courbe ajustée 55 représentant le paramètre théorique ajusté en fonction de l'inverse du libre parcours moyen. La courbe 55 est obtenue

14

à partir de l'ajustement du paramètre $\frac{K_i}{G_i}$ en utilisant la méthode des moindres carrés comme illustré sur la FIG.4D.

Ainsi, un tel procédé permet d'obtenir de manière non destructive et précise la résistivité hydraulique Ki de l'ensemble des pores de chaque couche de la structure entière.

Selon un ou plusieurs modes de réalisation, l'étape de déterminer le rapport $\frac{K_i}{G_i}$ pour l'ensemble des valeurs de A peut consister à :

- fixer arbitrairement une gamme de valeur pour le rapport *Ki/Gi* ;

- calculer $K_t U_P$ d'après la formule (VII) et à partir du rapport $\frac{G_j k_i}{G_i k_j}$ et des rayons ri et rj déterminés ;

- retenir la valeur de $\frac{k_i}{G_i}$ qui minimise les écarts, par exemple au sens des «moindres carrés entre le paramètre expérimental KU_P et le paramètre théorique $K_t U_P$.

- calculer $\frac{k_j}{G_j}$ à partir de $\frac{k_j}{G_j} = \frac{G_j k_i}{G_j k_i} / \frac{k_i}{G_i}$.

Selon un ou plusieurs modes de réalisation, pour chaque couche de la structure poreuse, on peut déterminer le rapport $\varepsilon_i / \tau_i^2 = 4 K_i / r_i^2$ avec $\varepsilon_i$ la porosité de la couche i de la structure poreuse et $\tau_i$ la tortuosité de la couche i de la structure poreuse, en utilisant les propriétés déterminées. Le rapport $\varepsilon i/\tau i^2$ est un coefficient de structure de la couche i représentatif du transport hydraulique dans la couche i. Le rapport $\varepsilon i/\tau i^2$ peut être considéré comme une interprétation de la résistivité hydraulique $k_i$ mesurée pour un ensemble de pores ayant les mêmes propriétés.

Selon un ou plusieurs modes de réalisation, le procédé permet de caractériser deux couches i et j d'une structure poreuse multicouche ayant une pluralité de couches, par exemple deux couches. Dans ce cas, la perte de charge du gaz à travers les couches à caractériser de la structure poreuse est égale à la différence entre la pression du gaz en amont de la structure poreuse et la pression du gaz en aval de la structure poreuse. En d'autres termes, la perte de charge $\Delta P$ utilisée pour la détermination du paramètre expérimental tel que le paramètre $\frac{d}{1-d}$ ou le paramètre KUp est égale directement au différentiel de pression mesuré.

Selon un ou plusieurs modes de réalisation, le procédé permet de caractériser deux couches i et j parmi n couches > 2.

Selon un ou plusieurs modes de réalisation, les n-2 couches ont des propriétés connues et des pertes de charges connues. Dans ce cas, la perte de charge du gaz à travers les couches à caractériser de la structure poreuse est égale à la différence entre la perte de charge de la structure poreuse et la perte de charge des n-2 couches, la perte de charge de la structure poreuse étant égale à la différence de pression du gaz en amont de la structure poreuse et la pression du gaz en aval de la structure poreuse. Les propriétés connues des n-2 couches permettent de calculer les pertes de charges.

Les tableaux I et II sont des tableaux qui présentent les propriétés de fibres poreuses multicouches obtenues par un exemple de procédé de la présente description. Le tableau I présente les propriétés de deux types de fibre poreuse (Fibre 1 et Fibre 2) à deux couches obtenues par un exemple de procédé et de système de la présente description. Le tableau II présente les propriétés de deux types de fibre poreuse (Fibre 3 et Fibre 4) à trois couches obtenues par un exemple de procédé et de système de la présente description. Dans l'exemple du tableau II, les propriétés de la couche 1 sont connues et l'on obtient les propriétés des couches 2 et 3. Sur ces deux tableaux, chaque fibre est caractérisée 2 fois afin de montrer la reproductibilité de la mesure.

Il est possible également à partir des rayons estimés des pores pour chaque couche et/ou à partir d'autres propriétés estimées des couches de la structure poreuse, d'obtenir par cette méthode une estimation des propriétés de chaque couche dont $\varepsilon_1 / \tau_1^2$ et de s'assurer que l'ensemble des propriétés est cohérent avec les propriétés estimées.

Bien que des modes de réalisation et exemples mentionnés ci-dessus soient décrits en détail, il est entendu que des modes de réalisation supplémentaires peuvent être envisagés. De plus, sauf spécification contraire dans la présente description, il sera apparent pour l'homme du métier que tous les modes de réalisation décrits ci-dessus peuvent être combinés entre eux. Par exemple, sauf spécification contraire, toutes les caractéristiques des modes de réalisation décrits ci-dessus, peuvent être combinées avec ou remplacées par d'autres caractéristiques d'autres modes de réalisation.

**Tableau I**

|  | $r_1(\mu m)$ | $\dfrac{\epsilon_1}{\tau_1^2}$ | $\tau_1(\varepsilon_1 = 25\%)$ | $r_2(\mu m)$ | $\dfrac{\epsilon_2}{\tau_2^2}$ | $\tau_2\,(\varepsilon2 = 4\,!\%)$ |
|---|---|---|---|---|---|---|
| **Fibre 1** | 1,6 | 0,09 | 1,7 | 0,26 | 0,03 | 3,7 |
|  | 1,4 | 0,15 | 1,3 | 0,27 | 0,04 | 3,5 |
| **Fibre 2** | 2,3 | 0,06 | 2,0 | 0,49 | 0,013 | 5,9 |
|  | 2,3 | 0,05 | 2,2 | 0,49 | 0,011 | 6,4 |

**Tableau II**

|  | $r_1\,(\mu m)$ | $\dfrac{\epsilon_1}{\tau_1^2}$ | $r_2(\mu m)$ | $\dfrac{\epsilon_2}{\tau_2^2}$ | $r_3(nm)$ | $\dfrac{\epsilon_3}{\tau_3^2}$ |
|---|---|---|---|---|---|---|
| **Fibre 3** | 1.6 | 0.14 | 0.23 | 0.10 | 73 | 0.09 |
|  | 1.6 | 0.13 | 0.26 | 0.05 | 56 | 0.16 |
| **Fibre 4** | 1.6 | 0.09 | 0.55 | 0.01 | 39 | 0.12 |
|  | 1.6 | 0.09 | 0.5 | 0.01 | 41 | 0.12 |

## Revendications

1. Procédé de caractérisation en milieu gazeux raréfié de couches d'une structure poreuse multicouche permettant une communication fluidique entre les couches et dans laquelle chaque couche comprend un ensemble de pores, le procédé comprenant les étapes suivantes :

   - écouler un gaz à travers les pores de la structure poreuse;
   - mesurer l'évolution temporelle de la pression du gaz en amont de la structure poreuse et l'évolution temporelle de la pression du gaz en aval de la structure poreuse ;

   ledit procédé étant **caractérisé en ce qu'**il comprend en outre les étapes suivantes :

   - établir un modèle d'écoulement du gaz dans la structure poreuse prenant en compte la vitesse de glissement du gaz à l'interface gaz /parois des pores et assumant que la perte de charge du gaz à travers la structure poreuse soit égale à la somme des pertes de charge du gaz à travers chaque couche de la structure poreuse;
   - ajuster le modèle d'écoulement du gaz dans la structure poreuse sur la base d'une courbe expérimentale d'un paramètre expérimental d'écoulement du gaz dans la structure poreuse tracée à partir des mesures de l'évolution temporelle des dites pressions du gaz en amont et en aval de la structure poreuse ; et
   - déterminer au moins une propriété de l'ensemble des pores de chaque couche à partir du modèle d'écoulement du gaz ainsi ajusté.

2. Procédé de caractérisation selon la revendication 1, dans lequel :

   - le paramètre expérimental d'écoulement du gaz dans la structure poreuse est fonction du libre parcours moyen ($\lambda$) des molécules du gaz à travers les pores de la structure poreuse ;
   - établir un modèle d'écoulement comprend établir, à partir du modèle d'écoulement, un paramètre théorique d'écoulement du gaz dans la structure dépendant du libre parcours moyen ($\lambda$) des molécules du gaz à travers les pores de la structure poreuse ; et
   - le modèle d'écoulement du gaz dans la structure poreuse est ajusté de sorte que le paramètre expérimental soit égal au paramètre théorique.

3. Procédé selon la revendication 1 ou la revendication 2, dans lequel :

- le paramètre expérimental d'écoulement du gaz dans la structure poreuse est $\frac{d}{1-d}$ et est déterminé sur la base de la formule (I) :

$$\frac{\Delta P|_{P=P_{ref}}}{\Delta P} = \left(\frac{P}{P_{ref}}\right)^d \quad (I)$$

dans laquelle Pref est une pression de référence, P est la pression du gaz en aval de la structure poreuse et $\Delta P$ est la perte de charge du gaz à travers les couches à caractériser de la structure poreuse;
- le libre parcours moyen ($\lambda$) des molécules du gaz à travers les pores de la structure poreuse est déterminé sur la base de la formule (II):

$$\lambda = \frac{\eta}{P_{ref}} U_P \quad (II)$$

dans laquelle $\eta$ est la viscosité dynamique du gaz et Up est la vitesse la plus probable des molécules du gaz ;
- le paramètre théorique d'écoulement du gaz dans la structure poreuse est établi sur la base de la formule (III) :

$$\frac{d_t}{1-d_t} = \frac{\frac{1}{\lambda}\left(\frac{1}{\left(\frac{1}{\lambda}+\frac{4\sigma_P}{r_i}\right)^2}+\frac{G_j k_i}{G_i k_j}\frac{1}{\left(\frac{1}{\lambda}+\frac{4\sigma_P}{r_j}\right)^2}\right)}{\left(\frac{\left(\frac{4\sigma_P}{r_i}\right)}{\left(\frac{1}{\lambda}+\frac{4\sigma_P}{r_i}\right)^2}+\frac{G_j k_i}{G_i k_j}\frac{\left(\frac{4\sigma_P}{r_j}\right)}{\left(\frac{1}{\lambda}+\frac{4\sigma_P}{r_j}\right)^2}\right)} \quad (III)$$

dans laquelle :

$G_i$ et $G_j$ sont un paramètre géométrique macroscopique d'une couche i et respectivement d'une couche j,
$K_i$ et $K_j$ sont la résistivité hydraulique de la couche i et respectivement de la couche j,
$\sigma_P$ est le coefficient de glissement du gaz à l'interface gaz/parois des pores de la structure et
$r_i$ et $r_j$ sont les rayons respectivement des couches i et j définis sur la base respectivement des formules (IV) et (V) :

$$\frac{1}{r_i} = \frac{1}{4\sigma_P a}\left(1 - \sqrt{\frac{b}{2}\frac{G_j k_i}{G_i k_j}}\right) \quad (IV)$$

et

$$\frac{1}{r_j} = \frac{1}{4\sigma_P a}\left(1 + \sqrt{\frac{b}{2\frac{G_j k_i}{G_i k_j}}}\right) \quad (V)$$

dans lesquelles a et b sont des coefficients à déterminer,

- ajuster le modèle d'écoulement du gaz dans la structure poreuse comprend :

∘ pour plusieurs pressions de référence choisies, déterminer la valeur du libre parcours moyen $\lambda$ et le paramètre expérimental $\frac{d}{1-d}$;

∘ déterminer les coefficients a et b en déterminant une droite pour les valeurs du libre parcours moyen $\lambda$ mesurées inférieures à $r_m/4\sigma_P$, $r_m$ étant le plus grand rayon des pores parmi des rayons estimés des pores de chaque couche de la structure poreuse, de sorte que $\frac{d}{1-d} = \frac{a}{\lambda} + b$ avec a et b les coefficients de la droite;

∘ déterminer le rapport $\frac{G_j}{G_i}\frac{K_i}{K_j}$ pour l'ensemble des valeurs du libre parcours moyen $\lambda$, de sorte que le paramètre expérimental $\frac{d}{1-d}$ soit égal au paramètre théorique $\frac{d_t}{1-d_t}$ ;

- l'au moins une propriété de l'ensemble des pores de chaque couche comprend les rayons ri et rj des pores de la couche i et respectivement de la couche j de la structure poreuse, les rayons ri et rj étant déterminés à partir du rapport $\frac{G_j}{G_i}\frac{K_i}{K_j}$ déterminé et des coefficients a et b déterminés.

4.  Procédé selon la revendication 3, comprenant en outre les étapes suivantes :

- déterminer, pour chaque pression P mesurée, un paramètre expérimental $KU_P$ de résistivité hydraulique dans la structure poreuse des molécules du gaz à travers les pores, sur la base de la formule (VI)

$$KU_P = \frac{QG}{\Delta P}\sqrt{2R'T} \ (VI)$$

dans laquelle K est la résistivité hydraulique de la structure poreuse, $U_p$ est la vitesse la plus probable des molécules du gaz, G est un paramètre géométrique macroscopique de la structure poreuse multicouche et R' est la constante spécifique du gaz utilisé considéré comme parfait ;
- pour chaque pression P mesurée, déterminer la valeur du libre parcours moyen $\lambda$ et le paramètre expérimental $KU_P$ de résistivité hydraulique; et
- établir, à partir du modèle d'écoulement du gaz, un paramètre théorique $K_tU_P$ de résistivité hydraulique de la structure,
dans lequel le paramètre théorique de résistivité hydraulique $K_tU_P$ est déterminé sur la base de la formule (VII) :

$$K_tU_P = \frac{\frac{k_iG}{G_i}}{\frac{1}{\left(\frac{1}{\lambda}+\frac{4\sigma_P}{r_i}\right)} + \frac{G_jk_i}{G_ik_j}\frac{1}{\left(\frac{1}{\lambda}+\frac{4\sigma_P}{r_j}\right)}} \quad (VII)$$

- déterminer le rapport $\frac{K_i}{G_i}$ pour l'ensemble des valeurs de $\lambda$, de sorte que le paramètre expérimental $KU_P$ soit égal au paramètre théorique $K_tU_P$ ; et

- déterminer la résistivité hydraulique $K_i$ et $K_j$ de l'ensemble des pores à partir de $\frac{K_i}{G_i}$ ainsi ajustés et $G_i$ et $G_j$ calculés.

5.  Procédé selon la revendication 4, comprenant en outre l'étape suivante :

- déterminer, pour chaque couche de la structure poreuse, le rapport $\varepsilon_i/\tau_i^2 = 4K_i/r_i^2$ avec $\varepsilon_i$ la porosité de la couche i de la structure poreuse et $\tau_i$ la tortuosité de la couche i de la structure poreuse.

6.  Procédé selon l'une quelconque des revendications 1 à 5, dans lequel la structure poreuse multicouche a deux couches.

7.  Procédé selon l'une quelconque des revendications 1 à 5, dans lequel la structure poreuse multicouche a n couches avec n > 2.

8.  Procédé selon la revendication 7, dans lequel n-2 couches ont des propriétés connues et des pertes de charges connues, et la perte de charge du gaz à travers les couches à caractériser est égale à la différence entre la perte de charge de la structure poreuse et la perte de charge des n-2 couches, la perte de charge de la structure poreuse étant égale à la différence de pression du gaz en amont de la structure poreuse et la pression du gaz en aval de la structure poreuse.

9. Procédé selon l'une quelconque des revendications 1 à 8, dans lequel la structure poreuse comprend une pluralité de couches planaires empilées chacune ayant une même surface plane S, une épaisseur $L_i$, le paramètre géométrique macroscopique de chaque couche étant $G_i$ égal à $L_i/S$.

10. Procédé selon les revendications 1 à 8, dans lequel la structure poreuse comprend une pluralité de couches en forme de cylindres concentriques, le paramètre géométrique macroscopique de chaque couche étant $G_i$ égale à

$$\frac{1}{2\pi H_i} \ln\left(\frac{D_{ext_i}}{D_{int_i}}\right)$$ avec $D_{ext_i}$, et $D_{int_i}$ le diamètre extérieur et respectivement intérieur et $H_i$ la longueur de la couche cylindrique i.

11. Système de caractérisation en milieu gazeux raréfié d'une structure poreuse multicouche (100) permettant une communication fluidique entre les couches (101, 102, 103), dans laquelle chaque couche comprend un ensemble de pores (101', 102', 103'), le système comprenant :

- un moyen d'écoulement d'un gaz à travers les pores de la structure poreuse,;
- un moyen de mesure de l'évolution temporelle de la pression du gaz en amont de la structure ;
- un moyen de mesure de l'évolution temporelle de la pression du gaz en aval de la structure ;

ledit système étant **caractérisé en ce qu'**il comprend en outre :

- un ordinateur configuré pour :

- déterminer un paramètre expérimental d'écoulement du gaz dans la structure poreuse en fonction du libre parcours moyen ($\lambda$) des molécules du gaz à travers les pores de la structure poreuse à partir des mesures de l'évolution temporelle desdites pressions du gaz en amont et en aval de la structure poreuse ;
- établir, à partir d'un modèle d'écoulement du gaz dans la structure poreuse, un paramètre théorique d'écoulement du gaz dans la structure dépendant du libre parcours moyen ($\lambda$) des molécules du gaz à travers les pores de la structure poreuse,
le modèle d'écoulement du gaz dans la structure poreuse prenant en compte la vitesse de glissement à l'interface gaz/parois des pores de chaque couche de la structure poreuse et assumant que la perte de charge du gaz à travers la structure poreuse soit égale à la somme des pertes de charge du gaz à travers chaque couche de la structure poreuse ;

- ajuster le modèle d'écoulement du gaz dans la structure poreuse de sorte que le paramètre expérimental soit égal au paramètre théorique ; et
- déterminer au moins une propriété de l'ensemble des pores de chaque couche à partir du modèle ajusté.

12. Système de perméamétrie gazeuse selon la revendication 11, dans lequel le moyen d'écoulement comprend une tuyère assurant l'écoulement du gaz dans la structure avec un débit constant.

13. Utilisation du procédé selon l'une quelconque des revendications 1 à 10, pour application en mesure de porométrie, en caractérisation de membrane, en caractérisation de plâtre, de pot catalytique, de béton ou de ciment, par exemple dans la cadre de contrôle qualité en série, ou pour optimisation du procédé d'obtention ou pour application en biomédicale.


**Patentansprüche**

1. Verfahren zur Charakterisierung, in einem verdünnten Gasmedium, von Schichten einer mehrschichtigen porösen Struktur, die eine Fluidkommunikation zwischen den Schichten ermöglicht und wobei jede Schicht einen Satz von Poren umfasst, wobei das Verfahren die folgenden Schritte umfasst:

- Strömen eines Gases durch die Poren der porösen Struktur;
- Messen des zeitlichen Verlaufs des Gasdrucks stromaufwärts der porösen Struktur und des zeitlichen Verlaufs des Gasdrucks stromabwärts der porösen Struktur;

wobei das Verfahren dadurch charakterisiert ist, dass es ferner die folgenden Schritte umfasst:

- Erstellen eines Modells der Strömung des Gases in der porösen Struktur unter Berücksichtigung der Gasgleitgeschwindigkeit an der Grenzfläche zwischen Gas und Porenwand und unter der Annahme, dass der Gasdruckabfall über die poröse Struktur gleich der Summe der Gasdruckabfälle über jede Schicht der porösen Struktur ist;
- Einstellen des Modells der Strömung des Gases in der porösen Struktur basierend auf einer experimentellen Kurve eines experimentellen Parameters der Strömung des Gases in der porösen Struktur, die aus Messungen des zeitlichen Verlaufs der Gasdrücke stromaufwärts und stromabwärts der porösen Struktur hervorgeht; und
- Bestimmen mindestens einer Eigenschaft des Satzes von Poren jeder Schicht aus dem so eingestellten Modell der Strömung des Gases in der porösen Struktur.

2. Verfahren zur Charakterisierung nach Anspruch 1, wobei:

- der experimentelle Parameter der Strömung des Gases in der porösen Struktur eine Funktion des mittleren freien Weges ($\lambda$) der Gasmoleküle durch die Poren der porösen Struktur ist;
- das Erstellen eines Modells der Strömung ein Erstellen eines theoretischen Parameters der Strömung des Gases in der Struktur, der vom mittleren freien Weg ($\lambda$) der Gasmoleküle durch die Poren der porösen Struktur abhängig ist, umfasst; und
- das Modell der Strömung des Gases in der porösen Struktur so eingestellt wird, dass der experimentelle Parameter gleich dem theoretischen Parameter ist.

3. Verfahren nach Anspruch 1 oder Anspruch 2, wobei:

- der experimentelle Parameter der Strömung des Gases in der porösen Struktur $\frac{d}{1-d}$ ist und basierend auf Formel (I) bestimmt wird:

$$\frac{\Delta P|_{P=P_{ref}}}{\Delta P} = \left(\frac{P}{P_{ref}}\right)^{d}$$

$$(\text{I})$$

wobei $P_{ref}$ ein Referenzdruck ist, P der Druck des Gases stromabwärts der porösen Struktur ist und $\Delta P$ der Druckabfall des Gases über die zu charakterisierenden Schichten der porösen Struktur ist;
- der mittlere freie Weg ($\lambda$) der Gasmoleküle durch die Poren der porösen Struktur basierend auf Formel (II) bestimmt wird:

$$\lambda = \frac{\eta}{P_{ref}} U_P$$

$$(\text{II})$$

wobei $\eta$ die dynamische Viskosität des Gases ist und $U_P$ die wahrscheinlichste Geschwindigkeit der Gasmoleküle ist;
- der theoretische Parameter der Strömung des Gases in der porösen Struktur basierend auf der Formel (III) festgelegt ist:

$$\frac{d}{1-d} = \frac{\dfrac{1}{\lambda}\left(\dfrac{1}{\left(\dfrac{1}{\lambda}+\dfrac{4\sigma_P}{r_i}\right)^2} + \dfrac{G_j K_i}{G_i K_j \left(\dfrac{1}{\lambda}+\dfrac{4\sigma_P}{r_j}\right)^2}\right)}{\left(\dfrac{\left(\dfrac{4\sigma_P}{r_i}\right)}{\left(\dfrac{1}{\lambda}+\dfrac{4\sigma_P}{r_i}\right)^2} + \dfrac{G_j K_i \left(\dfrac{4\sigma_P}{r_j}\right)}{G_i K_j \left(\dfrac{1}{\lambda}+\dfrac{4\sigma_P}{r_j}\right)^2}\right)}$$

(III)

wobei:

$G_i$ und $G_j$ ein makroskopischer geometrischer Parameter einer Schicht $i$ bzw. einer Schicht $j$ sind,
$K_i$ und $K_j$ der hydraulische Widerstand der Schicht $i$ bzw. der Schicht $j$ sind,
$\sigma_P$ der Gleitkoeffizient des Gases an der Grenzfläche zwischen Gas und Porenwand ist und
$r_i$ und $r_j$ die Radien der Schichten $i$ bzw. $j$ sind, die basierend auf den Formeln (IV) und (V) definiert sind:

$$\frac{1}{r_i} = \frac{1}{4\sigma_P a}\left(1 - \sqrt{\frac{b}{2}\frac{G_j K_i}{G_i K_j}}\right)$$

(IV)

und

$$\frac{1}{r_j} = \frac{1}{4\sigma_P a}\left(1 + \sqrt{\frac{b}{2\frac{G_j K_i}{G_i K_j}}}\right)$$

(V)

wobei $a$ und b zu bestimmende Koeffizienten sind,

- das Anpassen des Modells der Strömung des Gases in der porösen Struktur umfasst:

  ◦ für mehrere ausgewählte Referenzdrücke, Bestimmen des Wertes des mittleren freien Weges $\lambda$ und des experimentellen Parameters $\frac{d}{1-d}$;
  ◦ Bestimmen der Koeffizienten $a$ und $b$ durch Bestimmen einer Geraden für die Werte des mittleren freien Weges $\lambda$, gemessen unter $r_m/4\sigma_P$, wobei $r_m$ der größte Radius der Poren unter den geschätzten Radien der Poren jeder Schicht der porösen Struktur ist, derart, dass $\frac{d}{1-d} = \frac{a}{\lambda} + b$, wobei $a$ und $b$ die Koeffizienten der Geraden sind;
  ◦ Bestimmen des Verhältnisses $\frac{G_j\,K_i}{G_i\,K_j}$ für den Satz der Werte des mittleren freien Weges $\lambda$ derart, dass der experimentelle Parameter $\frac{d}{1-d}$ gleich dem theoretischen Parameter $\frac{d_t}{1-d_t}$ ist;

- die mindestens eine Eigenschaft des Satzes von Poren jeder Schicht die Radien $r_i$ und $r_j$ der Poren der Schicht $i$ bzw. der Schicht $j$ der porösen Struktur, wobei die Radien $r_i$ und $r_j$ aus dem bestimmten Verhältnis $\frac{G_j}{G_i}\frac{K_i}{K_j}$ bestimmt werden, und die bestimmten Koeffizienten $a$ und $b$ umfasst.

4. Verfahren nach Anspruch 3, ferner umfassend die folgenden Schritte:

- Bestimmen eines experimentellen Parameters $KU_P$ des hydraulischen Widerstands in der porösen Struktur der Gasmoleküle durch die Poren für jeden gemessenen Druck $P$ basierend auf der Formel (VI)

$$KU_P = \frac{QG}{\Delta P}\sqrt{2R'T}$$

$$(VI)$$

wobei $K$ der hydraulische Widerstand der porösen Struktur ist, $U_p$ die wahrscheinlichste Geschwindigkeit der Gasmoleküle ist, $G$ ein makroskopischer geometrischer Parameter der mehrschichtigen porösen Struktur ist und $R'$ die spezifische Konstante des verwendeten, als perfekt angesehenen Gases ist;
- Bestimmen des Wertes des mittleren freien Weges $\lambda$ und des experimentellen Parameters $KU_P$ des hydraulischen Widerstands für jeden gemessenen Druck $P$; und
- Erstellen eines theoretischen Parameters $K_tU_P$ des hydraulischen Widerstands der Struktur aus dem Modell der Strömung des Gases,
wobei der theoretische Parameter des hydraulischen Widerstands $K_tU_P$ basierend auf der Formel (VII) bestimmt wird:

$$K_tU_P = \frac{\frac{K_iG}{G_i}}{\frac{1}{\left(\frac{1}{\lambda}+\frac{4\sigma_P}{r_i}\right)}+\frac{G_j}{G_i}\frac{K_i}{K_j}\frac{1}{\left(\frac{1}{\lambda}+\frac{4\sigma_P}{r_j}\right)}}$$

$$(VII)$$

- Bestimmen des Verhältnisses $\frac{K_i}{G_i}$ für den Satz der Werte von $\lambda$ derart, dass der experimentelle Parameter $KU_P$ gleich dem theoretischen Parameter $K_tU_P$ ist; und

- Bestimmen des hydraulischen Widerstands $K_i$ und $K_j$ des Satzes von Poren aus dem eingestellten $\frac{K_i}{G_i}$ und den berechneten $G_i$ und $G_j$.

5. Verfahren nach Anspruch 4, ferner umfassend den folgenden Schritt:
- Bestimmen des Verhältnisses $\varepsilon_i / \tau_i^2 = 4K_i / r_i^2$, wobei $\varepsilon_i$ die Porosität der Schicht $i$ der porösen Struktur ist und $\tau_i$ die Tortuosität der Schicht $i$ der porösen Struktur ist, für jede Schicht der porösen Struktur.

6. Verfahren nach einem der Ansprüche 1 bis 5, wobei die mehrschichtige poröse Struktur zwei Schichten aufweist.

7. Verfahren nach einem der Ansprüche 1 bis 5, wobei die mehrschichtige poröse Struktur n Schichten mit n > 2 aufweist.

8. Verfahren nach Anspruch 7, wobei n-2 Schichten bekannte Eigenschaften und bekannte Druckabfälle aufweisen und der Gasdruckabfall über die zu charakterisierenden Schichten gleich der Differenz zwischen dem Druckabfall der porösen Struktur und dem Druckabfall der n-2-Schichten ist, wobei der Druckabfall der porösen Struktur gleich der Differenz zwischen dem Gasdruck stromaufwärts der porösen Struktur und dem Gasdruck stromabwärts der porösen Struktur ist.

9. Verfahren nach einem der Ansprüche 1 bis 8, wobei die poröse Struktur eine Vielzahl von gestapelten ebenen Schichten umfasst, die jeweils eine selbe ebene Oberfläche $S$, eine Dicke $L_i$ aufweisen, wobei der makroskopische geometrische Parameter jeder Schicht $G_i$ gleich $L_i/S$ ist.

10. Verfahren nach den Ansprüchen 1 bis 8, wobei die poröse Struktur eine Vielzahl von Schichten in Form konzentrischer Zylinder umfasst, wobei der makroskopische geometrische Parameter jeder Schicht $G_i$ gleich $\frac{1}{2\pi H_i}\ln\left(\frac{D_{ext_i}}{D_{int_i}}\right)$ mit $D_{ext_i}$ und $D_{int_i}$ als Außen-bzw. Innendurchmesser und $H_i$ als Länge der zylindrischen Schicht $i$ ist.

11. System zur Charakterisierung, in einem verdünnten Gasmedium, einer mehrschichtigen porösen Struktur (100), die eine Fluidkommunikation zwischen den Schichten (101, 102, 103) ermöglicht, wobei jede Schicht einen Satz von Poren (101', 102', 103') umfasst, wobei das System umfasst:

   - ein Mittel zum Strömen eines Gases durch die Poren der porösen Struktur;
   - ein Mittel zum Messen des zeitlichen Verlaufs des Gasdrucks stromaufwärts der porösen Struktur;
   - ein Mittel zum Messen des zeitlichen Verlaufs des Gasdrucks stromabwärts der porösen Struktur;

   wobei das System dadurch charakterisiert ist, dass es ferner umfasst:

   - einen Computer konfiguriert zum:

      ◦ Bestimmen eines experimentellen Parameters der Strömung des Gases in der porösen Struktur als Funktion des mittleren freien Weges ($\lambda$) der Gasmoleküle durch die Poren der porösen Struktur aus Messungen des zeitlichen Verlaufs der Gasdrücke stromaufwärts und stromabwärts der porösen Struktur;
      ◦ Erstellen eines theoretischen Parameters der Strömung des Gases in der Struktur, der vom mittleren freien Weg ($\lambda$) der Gasmoleküle durch die Poren der porösen Struktur abhängig ist, aus einem Modell der Strömung des Gases in der porösen Struktur, wobei das Modell der Strömung des Gases in der porösen Struktur die Gasgleitgeschwindigkeit an der Grenzfläche zwischen Gas und Porenwand jeder Schicht der porösen Struktur berücksichtigt und angenommen wird, dass der Gasdruckabfall über die poröse Struktur gleich der Summe der Gasdruckabfälle über jede Schicht der porösen Struktur ist;
      ◦ Einstellen des Modells der Strömung des Gases in der porösen Struktur derart, dass der experimentelle Parameter gleich dem theoretischen Parameter ist; und
      ◦ Bestimmen mindestens einer Eigenschaft des Satzes von Poren jeder Schicht aus dem so eingestellten Modell.

12. System zur Gaspermeametrie nach Anspruch 11, wobei das Mittel zum Strömen eine Düse umfasst, die die Strömung des Gases in der Struktur mit einer konstanten Strömung sicherstellt.

13. Verwendung des Verfahrens nach einem der Ansprüche 1 bis 10 zur Anwendung bei der Porometriemessung, bei der Charakterisierung von Membranen, bei der Charakterisierung von Gips, von Katalysatoren, von Beton oder Zement, beispielsweise im Rahmen der Qualitätskontrolle in Serien oder zur Optimierung des Herstellungsprozesses oder zur Anwendung in der Biomedizin.

**Claims**

1. Method for **characterizing, in** a rarefied gaseous medium, layers of a multilayer porous structure allowing fluid communication between the layers and in which each layer comprises a set of pores, the method comprising the following steps:

   - flowing a gas through the pores of the porous structure;
   - measuring the temporal evolution of the gas pressure upstream of the porous structure and the temporal evolution of the gas pressure downstream of the porous structure;

   said method being **characterised in that** it further comprises the steps of:

- establishing a model of gas flow in the porous structure taking into account the sliding speed of the gas at the gas/pore wall interface and assuming that the pressure drop of the gas through the porous structure is equal to the sum of the pressure drops of the gas through each layer of the porous structure;
- adjusting the model of gas flow in the porous structure on the basis of an experimental curve of an experimental gas flow parameter in the porous structure plotted from measurements of the temporal evolution of said gas pressures upstream and downstream of the porous structure; and
- determining at least one property of the set of pores of each layer from the thus adjusted gas flow model.

2. Characterizing method according to claim 1, wherein:

- the experimental gas flow parameter in the porous structure is a function of the mean free path ($\lambda$) of the gas molecules through the pores of the porous structure;
- establishing a flow model comprises establishing, from the flow model, a theoretical gas flow parameter in the structure dependent on the mean free path ($\lambda$) of the gas molecules through the pores of the porous structure; and
- the gas flow model in the porous structure is adjusted so that the experimental parameter is equal to the theoretical parameter.

3. Method according to claim 1 or claim 2, wherein:

- the experimental gas flow parameter in the porous structure is $\dfrac{d}{1-d}$ and is determined on the basis of formula (I):

$$\frac{\Delta P|_{P=P_{ref}}}{\Delta P} = \left(\frac{P}{P_{ref}}\right)^{d} \quad (I)$$

wherein $P_{ref}$ is a reference pressure, P is the gas pressure downstream of the porous structure and $\Delta P$ is the pressure drop of the gas through the layers of the porous structure to be characterized;
- the mean free path ($\lambda$) of the gas molecules through the pores of the porous structure is determined on the basis of formula (II):

$$\lambda = \frac{\eta}{P_{ref}}\, U_{P} \quad (II)$$

wherein $\eta$ is the gas dynamic viscosity and $U_P$ is the most probable speed of the gas molecules;
- the theoretical gas flow parameter in the porous structure is established on the basis of formula (III):

$$\frac{d_t}{1-d_t} = \frac{\frac{1}{\lambda}\left(\frac{1}{\left(\frac{1}{\lambda}+\frac{4\sigma_P}{r_i}\right)^2} + \frac{G_j k_i}{G_i k_j}\frac{1}{\left(\frac{1}{\lambda}+\frac{4\sigma_P}{r_j}\right)^2}\right)}{\left(\frac{\left(\frac{4\sigma_P}{r_i}\right)}{\left(\frac{1}{\lambda}+\frac{4\sigma_P}{r_i}\right)^2} + \frac{G_j k_i}{G_i k_j}\frac{\left(\frac{4\sigma_P}{r_j}\right)}{\left(\frac{1}{\lambda}+\frac{4\sigma_P}{r_j}\right)^2}\right)} \quad (III)$$

wherein:

$G_i$ and $G_j$ are a macroscopic geometrical parameter of a layer i and of a layer j, respectively,
$K_i$ and $K_j$ are the hydraulic resistivity of the layer i and of the layer j, respectively,
$\sigma_P$ is the gas sliding coefficient at the gas/pore wall interface of the structure and
$r_i$ and $r_j$ are the radii of the layers i and j, respectively, defined on the basis of formulae (IV) and (V), respectively:

$$\frac{1}{r_i} = \frac{1}{4\sigma_P a}\left(1 - \sqrt{\frac{b \frac{G_j k_i}{2 \frac{G_i k_j}}}}\right) \qquad \text{(IV)}$$

an

$$\frac{1}{r_j} = \frac{1}{4\sigma_P a}\left(1 + \sqrt{\frac{b}{2\frac{G_j k_i}{G_i k_j}}}\right) \qquad \text{(V)}$$

wherein a and b are coefficients to be determined,

- adjusting the gas flow model in the porous structure comprises:

   ◦ for several selected reference pressures, determining the value of the mean free path $\lambda$ and the experimental parameter $\frac{d}{1-d}$
   ◦ determining the coefficients a and b by determining a straight line for the mean free path $\lambda$ measured values of less than $r_m/4\sigma_p$, wherein $r_m$ is the largest pore radius among the estimated pore radii of each layer of the porous structure, so that $\frac{d}{1-d} = \frac{a}{\lambda} + b$ with a and b being the coefficients of the straight line;
   ◦ determining the $\frac{G_j}{G_i}\frac{k_i}{k_j}$ ratio for all the values of the mean free path $\lambda$, so that the experimental parameter $\frac{d}{1-d}$ is equal to the theoretical parameter $\frac{d_t}{1-d_t}$,

- the at least one property of the set of pores of each layer comprises the radii $r_i$ and $r_j$ of the pores of the layer i and of the layer j, respectively, of the porous structure, the radii $r_i$ and $r_j$ being determined from the determined $\frac{G_j}{G_i}\frac{k_i}{k_j}$ ratio and the determined coefficients a and b.

4. Method according to claim 3, further comprising the following steps:

   - determining, for each measured pressure P, an experimental parameter $KU_P$ of hydraulic resistivity in the porous structure of the gas molecules through the pores, on the basis of formula (VI)

$$KU_P = \frac{QG}{\Delta P}\sqrt{2R'T} \quad \text{(VI)}$$

   wherein K is the hydraulic resistivity of the porous structure, $U_p$ is the most probable speed of the gas molecules, G is a macroscopic geometrical parameter of the multilayer porous structure and R' is the specific constant of the gas used considered perfect;
   - for each measured pressure P, determining the value of the mean free path $\lambda$ and the experimental parameter $KU_P$ of hydraulic resistivity; and
   - establishing, from the gas flow model, a theoretical parameter $K_tU_P$ of hydraulic resistivity of the structure, wherein the theoretical parameter of hydraulic resistivity $K_tU_P$ is determined on the basis of formula (VII):

$$K_tU_P = \frac{\frac{k_i G}{G_i}}{\frac{1}{\left(\frac{1}{\lambda}+\frac{4\sigma_P}{r_i}\right)} + \frac{G_j k_i}{G_i k_j}\frac{1}{\left(\frac{1}{\lambda}+\frac{4\sigma_P}{r_j}\right)}} \qquad \text{(VII)}$$

- determining the $\dfrac{K_i}{G_j}$ ratio for all the values of $\lambda$, so that the experimental parameter $KU_P$ is equal to the theoretical parameter $K_tU_P$; and

- determining the hydraulic resistivity $K_i$ and $K_j$ of the set of pores from $\dfrac{K_i}{G_j}$, thus adjusted, and calculated $G_i$ and $G_j$.

5. Method according to claim 4, further comprising the following steps:

- determining, for each layer of the porous structure, the $\varepsilon_i/\tau_i^2 = 4K_i/r_i^2$ ratio with $\varepsilon_i$ being the porosity of the layer i of the porous structure and $\tau_i$ the tortuosity of the layer i of the porous structure.

6. Method according to any one of claims 1 to 5, wherein the multilayer porous structure has two layers.

7. Method according to any one of claims 1 to 5, wherein the multilayer porous structure has n layers with n>2.

8. Method according to claim 7, wherein n-2 layers have known properties and known pressure drops, and the pressure drop of the gas through the layers to be characterized is equal to the difference between the pressure drop of the porous structure and the pressure drop of the n-2 layers, the pressure drop of the porous structure being equal to the difference between the gas pressure upstream of the porous structure and the gas pressure downstream of the porous structure.

9. Method according to any one of claims 1 to 8, wherein the porous structure comprises a plurality of stacked planar layers each having a same planar surface S, a thickness Li, the macroscopic geometric parameter of each layer being $G_i$ equal to $L_i/S$.

10. A method according to claims 1 to 8, wherein the porous structure comprises a plurality of concentric cylinder-shaped layers, the macroscopic geometric parameter of each layer being $G_i$ equal to $\dfrac{1}{2\pi H_i} ln\left(\dfrac{Dext_i}{Dint_i}\right)$ with $D_{ext_i}$ and $D_{int_i}$ being the outer and inner diameters respectively and $H_i$ being the length of the cylindrical layer i.

11. System for **characterizing, in** a rarefied gaseous medium, a multilayer porous structure (100) allowing fluid communication between the layers (101, 102, 103), wherein each layer comprises a set of pores (101', 102', 103'), the system comprising:

a means for flowing a gas through the pores of the porous structure,
a means for measuring the temporal evolution of the gas pressure upstream of the structure;
a means for measuring the temporal evolution of the gas pressure downstream of the structure;
said system being **characterized in that** it further comprises:

- a computer configured for:

- determining an experimental gas flow parameter in the porous structure as a function of the mean free path ($\lambda$) of the gas molecules through the pores of the porous structure from measurements of the temporal evolution of said gas pressures upstream and downstream of the porous structure;
- establishing, from a gas flow model in the porous structure, a theoretical gas flow parameter in the structure dependent on the mean free path ($\lambda$) of the gas molecules through the pores of the porous structure,

the gas flow model in the porous structure taking into account the sliding velocity at the gas/pore wall interface of the pores of each layer of the porous structure and assuming that the pressure drop of the gas through the porous structure is equal to the sum of the pressure drops of the gas through each layer of the porous structure;

- adjusting the gas flow model in the porous structure so that the experimental parameter is equal to the theoretical parameter; and

- determining at least one property of the set of pores in each layer from the adjusted model.

12. Gas permeametry system according to claim 11, wherein the flow means comprises a nozzle ensuring the gas flow into the structure at a constant rate.

13. Use of the method according to any one of claims 1 to 10, for application in porometry measurement, in membrane characterization, in plaster, catalytic converter, concrete or cement characterization, for example in serial quality control, or for optimization of the production method or for biomedical applications.

FIG.1A

FIG.1B

EP 3 502 659 B1

EP 3 502 659 B1

FIG.2

FIG.3A

FIG.3B

FIG.3c

FIG.3D

FIG.4A

FIG.4B

FIG.4C

FIG.4D

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 6766257 B2

**Littérature non-brevet citée dans la description**

- **W.-M. ZHANG ; G. MENG ; X. WEI.** A review on slip models for gas microflows. *Microfluidics and Nanofluidics,* 2012, vol. 13 (6), 845-882